(19) Europäisches Patentamt
European Patent Office
Office européen des brevets

(11) **EP 2 602 982 B1**

(12) **EUROPÄISCHE PATENTSCHRIFT**

(45) Veröffentlichungstag und Bekanntmachung des Hinweises auf die Patenterteilung:
**31.10.2018 Patentblatt 2018/44**

(51) Int Cl.:
***H04L 29/06*** (2006.01)       ***H04M 3/38*** (2006.01)

(21) Anmeldenummer: **12195697.3**

(22) Anmeldetag: **05.12.2012**

(54) **Authentifikation von Teilnehmern eines Telefoniedienstes**

Authentication of participants in a telephony service

Authentification de participants d'un service téléphonique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.12.2011 DE 102011056038**

(43) Veröffentlichungstag der Anmeldung:
**12.06.2013 Patentblatt 2013/24**

(73) Patentinhaber: **AUTHADA GmbH**
**64293 Darmstadt (DE)**

(72) Erfinder:
• **Wiens, Torsten**
**64331 Weiterstadt (DE)**
• **Plies, Andreas**
**64289 Darmstadt (DE)**
• **Massoth, Michael, Prof. Dr.**
**64289 Darmstadt (DE)**

(74) Vertreter: **Katscher Habermann Patentanwälte**
**Dolivostraße 15A**
**64293 Darmstadt (DE)**

(56) Entgegenhaltungen:
**WO-A1-2007/131523     WO-A2-03/075540**
**US-A1- 2005 063 522**

## Beschreibung

Die vorliegende Erfindung betrifft die Authentifikation von Teilnehmern eines Telefoniedienstes und insbesondere ein Verfahren, ein System und eine Vorrichtung, welche die Authentifikation einzelner Teilnehmer ermöglichen.

Bei sicherheitskritischen Anwendungen müssen Gesprächspartner in Telefongesprächen auf die Authentizität ihres Gegenübers vertrauen. Dies betrifft zum Beispiel die Kommunikation mit Personen bestimmter Berufsgruppen, welche aus standesrechtlichen Gründen zur Geheimhaltung verpflichtet sind, oder die Kommunikation mit Ämtern und anderen Dienstleistern, beispielsweise Banken und andere Auskunfts- oder Informationsdienste, bei denen sicherheitskritische Informationen im Laufe der Kommunikation übermittelt werden müssen.

Bei solchen Anwendungen wird typischerweise eine anfänglich behauptete Identität einer Partei oder eines Teilnehmers der Kommunikation beispielsweise durch Austausch von Authentifikationsmerkmalen überprüft. Hierbei wird unter der Authentizität eines Teilnehmers im Allgemeinen die Echtheit und Glaubwürdigkeit des Teilnehmers verstanden, die anhand einer eindeutigen Identität und von charakteristischen Eigenschaften überprüfbar ist. Diese werden durch geeignete Authentifikationsverfahren überprüft, wobei nachgewiesen werden muss, dass eine behauptete Identität des Teilnehmers mit seinen charakteristischen Eigenschaften übereinstimmt.

Es besteht jedoch ein grundlegendes Problem darin, dass sich die Identität eines Teilnehmers während der Kommunikation ändern kann. Dies kann beispielsweise aufgrund eines Man in the Middle-Angriffs auf eine bestehende Kommunikationssitzung geschehen, wobei ein Angreifer die Identität des Teilnehmers übernimmt und in seinem Namen handelt. Ferner besteht ein Problem in einer falsch behaupteten Identität, die vom Authentifikationsverfahren jedoch fälschlicherweise als richtig erkannt wird. Entweder kann hierbei ein Angreifer im Besitz der Authentifikationsmerkmale des Benutzers sein oder Schwächen des Authentifikationsverfahrens ausnutzen. Ein weiteres Problem von Authentifikationsverfahren besteht darin, dass die während der Authentifikation übertragenen Daten von einem Angreifer mitgelesen werden können, so dass sich der Angreifer zu einem späteren Zeitpunkt mit den abgehörten Daten als der eigentliche Teilnehmer authentifizieren kann.

Zur Lösung dieser Probleme sind Ansätze bekannt, bei denen keine direkte Übertragung der Authentifikationsmerkmale erfolgt, so dass die zur Authentifikation benötigten Daten nicht mehr von dem betroffenen Teilnehmer selbst übermittelt werden, beispielsweise Zero Knowledge- oder Challenge/Response-Verfahren. Vielmehr muss der Teilnehmer lediglich einen Beweis dafür liefert, dass er die Daten besitzt. Ebenfalls sind Lösungen bekannt, welche die zur Authentifikation benötigten Daten nur einmalig verwenden oder das Authentifikationsmerkmal auf einem getrennten Kanal, dem so genannten Second Channel, übermitteln. Jedoch besteht auch bei diesen Ansätzen nach wie vor das Problem, dass eine Zuordnung des verwendeten Authentifikationsmerkmals zur tatsächlichen Identität einer Person nicht immer eindeutig möglich ist und die Authentifikation weiteren Einschränkungen unterliegen kann.

Des Weiteren sind Authentifikationsverfahren bekannt, welche auf stimmbasierter oder biometrischer Sprecherverifikation basieren, die sowohl textbasiert als auch textunabhängig ausgestaltet sein können. Solche Verfahren sind insbesondere aus Telefonbanking-Szenarien bekannt und werden teilweise mit einer Übermittlung von konventionellen PIN/TAN-Authentifikationsmerkmalen kombiniert. Diese Authentifikationsverfahren erfordern jedoch ein Training auf die Eigenschaften der Stimme der jeweiligen Teilnehmer, um zuverlässige Aussagen über die Authentizität der Teilnehmer treffen zu können. Entsprechend nehmen diese Verfahren durch das Training eine längere Zeit für die Authentifikation in Anspruch und sind im Hinblick auf sich ändernde oder gestörte Kanalübermittlungseigenschaften oder auf Stimmänderungen eines Benutzers, beispielsweise durch Krankheit oder andere Umstände, störanfällig.

WO 2007/131523 A1 beschreibt ein Authentifizierungsverfahren, das zur Authentifizierung von Nachrichten verwendet werden kann, die in einem Kommunikationsnetz als Pakete zwischen einem Sender und einem Empfänger übermittelt werden. Hierzu ist ein Sendersteuermodul vorgesehen, das die übermittelten Daten speichert und aus den Daten Authentifizierungsdaten erzeugt, die dann über einen sicheren Datenkanal an ein Empfängersteuermodul übertragen werden. Das Empfängersteuermodul speichert wiederum die über den Kanal empfangenen Daten und berechnet hieraus die jeweiligen Authentifizierungsdaten. Durch einen Vergleich der Authentifizierungsdaten kann die Authentizität der Nachricht bestimmt werden.

US 2005/0063522 A1 beschreibt ein biometrisches Authentifizierungssystem, welches Sprachsamples verarbeitet. In einem ersten Schritt wird ein authentisches Sprachsample erfasst und gespeichert, das dann von einem Vergleichssystem für einen Vergleich mit eingegebenen Sprachsamples verwendet wird.

WO 03/075540 A2 beschreibt einen Authentifizierungsansatz, welcher mehrere Faktoren verwendet, wobei einer der Faktoren ein Sprachmuster des Benutzers ist. Hierbei werden die Sprachmuster an ein Sprecherverifikationsteilsystem in dem Kommunikationsnetz weitergeleitet und zur Authentifizierung verwendet.

Es ist somit eine Aufgabe der vorliegenden Erfindung, die vorgenannten Probleme zu lösen und insbesondere einen Ansatz bereitzustellen, der eine einfache und schnelle Authentifikation von Teilnehmern eines Telefoniedienstes erlaubt, der die Integrität der Kommunikation und die Authentizität der Teilnehmer während der Kommunikation sicherstellt.

Diese Aufgabe wird durch ein Authentifikationsverfahren gemäß dem Hauptanspruch, sowie durch ein System und eine Vorrichtung zur Authentifikation von Teilnehmern gelöst, wie sie in den nebengeordneten Ansprüchen definiert sind.

Das erfindungsgemäße Verfahren zur Authentifikation von Teilnehmern eines Telefoniedienstes umfasst ein Aufbauen eines Übertragungskanals zwischen einem ersten und mindestens einem zweiten Endgerät von Teilnehmern des Telefoniedienstes, wobei Sprachsignale, die über den Übertragungskanal übertragen werden, an jedem Endgerät abgetastet werden und aus den abgetasteten Sprachsignalen an jedem Endgerät ein Prüfdatensatz erzeugt wird. Ferner wird mindestens ein erster Prüfdatensatz der Prüfdatensätze von dem ersten Endgerät aus über einen Sicherheitskanal gesendet und der mindestens eine über den Sicherheitskanal gesendete erste Prüfdatensatz wird mit mindestens einem zweiten Prüfdatensatz der Prüfdatensätze verglichen.

Durch das synchronisierte Abtasten der Sprachsignale und Erzeugen des Prüfungsdatensatzes aus den abgetasteten Sprachsignalen an jedem Endgerät wird eine Referenz für das über den Übertragungskanal übertragene Sprachsignal an dem jeweiligen Endgerät erzeugt. Hierbei kann das über den Übertragungskanal übertragene und an einem der Endgeräte abgetastete Sprachsignal die von dem Endgerät gesendeten Sprachsignale, die am Endgerät empfangenen Sprachsignale und vorzugsweise sowohl die gesendeten als auch die empfangenen Sprachsignale umfassen, so dass die am ersten Endgerät abgetasteten Sprachsignale, aus denen der mindestens eine erste Prüfdatensatz erzeugt wird, im Wesentlichen den am zweiten Endgerät abgetasteten Sprachsignalen entsprechen, aus denen der zweite Prüfdatensatz erzeugt wird. Indem mindestens einer der Prüfdatensätze, beispielsweise der erste Prüfdatensatz, als entfernter Prüfdatensatz über den Sicherheitskanal gesendet und mit mindestens einem zeitlich entsprechenden lokalen Prüfdatensatz eines anderen Endgeräts, beispielsweise mit dem zweiten Prüfdatensatz, verglichen wird, wird während der Kommunikation die Authentizität mindestens eines der Teilnehmer und somit auch zumindest einseitig die Integrität des Übertragungskanals für die Zeitdauer der Abtastung überprüft. Ein entfernter Teilnehmer (und somit auch zumindest teilweise der Übertragungskanal) kann hierbei für einen lokalen Teilnehmer als authentisch gelten, wenn der Vergleich des gesendeten Prüfdatensatzes mit einem entsprechenden lokalen Prüfdatensatz erfolgreich ist, woraus folgt, dass zumindest die über den Übertragungskanal von dem entfernten Teilnehmer aus gesendeten Sprachsignale im Wesentlichen mit denen übereinstimmen, die beim lokalen Teilnehmer angekommen sind. Durch eine Wiederholung des Verfahrens und eine entsprechende kontinuierliche, synchronisierte Abtastung an allen Endgeräten kann somit die Authentizität der Teilnehmer und die Integrität des Übertragungskanals sichergestellt werden.

Die Kommunikation und der Telefoniedienst sind hierbei nicht auf eine klassische Telefonkommunikation zwischen zwei Endgeräten von zwei Teilnehmern beschränkt. Vielmehr können unterschiedliche Endgeräte und eine Vielzahl von Teilnehmern an einer Telekommunikation teilnehmen, beispielsweise in Form einer Telefonkonferenz. Die Endgeräte können beliebige zur Sprachkommunikation geeignete Endgeräte sein, so beispielsweise klassische Telefone, wie Kabeltelefone, Mobiltelefone, schnurlose Telefone oder Satellitentelefone und andere Telefonie-Endgeräte, beispielsweise Smartphones, Pads und Rechenvorrichtungen, welche zur Kommunikation zwischen Teilnehmern eines Telefoniedienstes verwendet werden können. Einem Teilnehmer können ebenfalls mehrere miteinander verbundene Endgeräte zugeordnet sein. Ferner kann ein Endgerät mehrere miteinander kommunizierende Vorrichtungen umfassen, beispielsweise ein Telefongerät, das an einen Kommunikationsserver gekoppelt ist. Hierbei kann sowohl das Telefon als auch der Kommunikationsserver oder eine der Komponenten das Endgerät sein, so dass beispielsweise die Sprachsignale, die über den Übertragungskanal übertragen werden, von dem Kommunikationsserver abgetastet werden, der ebenfalls aus den abgetasteten Sprachsignalen einen Prüfdatensatz erzeugen kann. Der Teilnehmer kann hierbei eine reale Person oder ein virtueller Teilnehmer sein, beispielsweise ein durch einen Computer bereitgestelltes Sprach- und Kommunikationssystem, welches über den Kommunikationsserver mit dem anderen Teilnehmer kommuniziert. Ferner kann neben oder zusätzlich zu der klassischen Sprachübertragung durch den Telefoniedienst auch eine Audio/Video-Übertragung, eine Sprach- und Bildübertragung sowie eine Datenübertragung, beispielsweise von Bankdaten, bereitgestellt sein. Hierbei können die weiteren übertragenen Daten und Signale neben den abgetasteten Sprachsignalen verwendet werden, um an den Endgeräten der jeweiligen Teilnehmer die entsprechenden Prüfdatensätze zur Authentifikation zu erzeugen.

Zur Abtastung der Sprachsignale können bestehende Schnittstellen an den jeweiligen Endgeräten verwendet werden, welche bereits zur Spracheingabe der Teilnehmer verwendet werden, so z.B. ein integriertes Mikrofon des Endgeräts oder eine andere Hardware-Komponente oder Schnittstelle. Ferner kann eine solche Komponente oder Schnittstelle auch als Software realisiert sein, welche mit einer entsprechenden Kommunikationsschnittstelle des Endgeräts kommunizieren und die Sprachsignale abtasten kann. Verständlicherweise kann zur Abtastung auch eine zusätzliche Vorrichtung, beispielsweise ein externes Mikrofon verwendet werden, welches entweder direkt am Endgerät angebracht sein kann oder als Headset oder als Raummikrofon bereitgestellt sein kann, um die Sprachsignale des Teilnehmers abzutasten.

Durch das erfindungsgemäße Verfahren können eine Vielzahl von Angriffen auf den Telefoniedienst abgewehrt werden, beispielsweise Man in the Middle-Angriffe sowie sonstige Versuche, den Übertragungskanal oder die Identität eines der Teilnehmer zu übernehmen, um die Integrität der Kommunikation zu stören. Falls überhaupt praktisch möglich, wäre es bei dem erfindungsgemäßen Ansatz potentiellen Angreifern nur unter einem sehr hohen technischen Aufwand möglich, übereinstimmende Prüfdatensätze der jeweiligen Teilnehmer zu simulieren und in den Sicherheitskanal einzuschleusen.

Das Verfahren bietet somit einen hohen Sicherheitsgrad und ist universell einsetzbar, da es insbesondere nicht von einem verwendeten Endgerät, Telefonsystem oder -netz abhängt. Das Verfahren ist ebenfalls robust, da durch das Abtasten der Sprachsignale an jedem Endgerät von allen Teilnehmern auf Änderungen des Übertragungssignals reagiert werden kann. Weitere Kommunikationsstörungen können durch geeignete Signalverarbeitungs- und Analyseverfahren bei der Erzeugung der Prüfdatensätze an den Endgeräten wirkungsvoll unterdrückt werden. Das erfindungsgemäße Verfahren erfordert ferner keine übermäßigen Rechenressourcen, so dass es bereits auf mobilen Endgeräten, wie beispielsweise Smartphones, Pads oder Tablet-PCs direkt eingesetzt werden kann. Schließlich erfordert das erfindungsgemäße Verfahren keine Anpassung des Authentifikationsverfahrens an die einzelnen Teilnehmer, beispielsweise durch ein Training, und ist somit flexibel bei der Sprachkommunikation zwischen beliebigen Teilnehmern zuverlässig einsetzbar.

In einer bevorzugten Ausführungsform der vorliegenden Erfindung umfasst das Verfahren ferner ein Empfangen des ersten Prüfdatensatzes über den Sicherheitskanal an dem zweiten Endgerät, wobei der über den Sicherheitskanal empfangene erste Prüfdatensatz mit dem zweiten Prüfdatensatz durch das zweite Endgerät verglichen wird. Hierdurch kann der Teilnehmer an dem zweiten Endgerät die Authentizität des Teilnehmers an dem ersten Endgerät prüfen, wodurch die Integrität des Telefoniedienstes einseitig überprüft werden kann. Beispielsweise kann ein Anbieter des Telefoniedienstes sicherstellen, dass sich die Identität der Teilnehmer, beispielsweise seiner Kunden, nicht dadurch ändert, dass der Übertragungskanal zwischen dem Anbieter und einem Kunden von einem Dritten in unerwünschter Weise übernommen worden ist. Hierzu können an den Endgeräten der Kunden die Sprachsignale abgetastet werden und entsprechende Prüfdatensätze über den Sicherheitskanal an den Anbieter, der in diesem Fall über das zweite Endgerät, beispielsweise einen Kommunikationsserver, kommuniziert, gesendet werden, der dann z.B. in dem Kommunikationsserver einen Vergleich mit seinem lokalen zweiten Prüfdatensatz vornehmen kann. Ebenso könnte auch die Überprüfung der Authentizität des Anbieters an den Endgeräten der Kunden stattfinden, um sicherzustellen, dass der Kunde nicht mit einem Dritten kommuniziert, der den Übertragungskanal übernommen hat. Hierzu kann der Anbieter das Sprachsignal an seinem Endgerät, in diesem Fall dem ersten Endgerät abtasten und über den Sicherheitskanal an seine Kunden senden, welche dann den Prüfdatensatz mit ihrem lokalen Prüfdatensatz vergleichen. Somit kann zumindest eine einseitige Überprüfung der Integrität des Übertragungskanals und somit eine einseitige Authentifikation erfolgen.

Vorzugsweise wird jedoch auch der zweite Prüfdatensatz von dem zweiten Endgerät aus über den Sicherheitskanal gesendet. Hierbei umfasst das Verfahren ferner ein Empfangen des zweiten Prüfdatensatzes über den Sicherheitskanal an dem ersten Endgerät und ein Vergleichen des über den Sicherheitskanal empfangenen zweiten Prüfdatensatzes mit dem ersten Prüfdatensatz durch das erste Endgerät. Durch den wechselseitigen Austausch der Prüfdatensätze wird die Möglichkeit eröffnet, dass neben der Authentizität des Teilnehmers am ersten Endgerät wechselseitig und unabhängig voneinander auch die Authentizität des Teilnehmers an dem zweiten Endgerät überprüft werden kann. Entsprechend kann auch jeder weitere Teilnehmer des Telefoniedienstes seinen jeweiligen Prüfdatensatz über den Sicherheitskanal senden und so eine Überprüfung seiner Authentizität ermöglichen. Hiermit kann besonders effektiv eine zwei- oder mehrseitige Überprüfung der Teilnehmer des Telefoniedienstes erreicht werden. Insbesondere kann auch jeder Teilnehmer seinen Prüfdatensatz über den Sicherheitskanal senden und/oder die anderen Prüfungsdatensätze über den Sicherheitskanal empfangen und mit der lokalen Kopie seines Prüfungsdatensatzes vergleichen. Durch die wechselseitige und voneinander weitestgehend unabhängige Authentifikation kann ein hohes Maß an Sicherheit erreicht werden, wodurch eine unerwünschte Übernahme von Identitäten der Teilnehmer oder eine Kompromittierung des Telefoniedienstes durch einen Angreifer praktisch geradezu unmöglich wird.

In einer bevorzugten Ausführungsform der vorliegenden Erfindung umfasst das Verfahren ebenfalls ein Senden des zweiten Prüfdatensatzes von dem zweiten Endgerät aus über den Sicherheitskanal, wobei der über den Sicherheitskanal gesendete erste Prüfdatensatz mit dem über den Sicherheitskanal gesendeten zweiten Prüfdatensatz durch eine Vergleichseinheit verglichen wird, die an den Sicherheitskanal gekoppelt ist und beide gesendeten Prüfdatensätze empfängt. Somit muss der Vergleich nicht auf irgendeinem oder einem einzelnen Endgerät durchgeführt werden, das ggf. nur eingeschränkte Rechenressourcen zur Verfügung stellt. Vielmehr können auch Vergleichsverfahren auf einer entsprechend eingerichteten Vergleichseinheit, beispielsweise auf einem Rechner in einer Sicherheitsinfrastruktur ausgeführt werden, welche die Leistungsfähigkeit der Endgeräte übersteigen. Auch dieser Ansatz stellt eine besonders sichere Überprüfungsmöglichkeit der Authentizität der jeweiligen Teilnehmer des Telefoniedienstes zur Verfügung, die durch eine zentralisierte, vertrauenswürdige Vergleichseinheit durchgeführt werden kann. Die einzelnen Endgeräte können über das Ergebnis der Prüfung durch geeignete Nachrichten über den Sicherheitskanal informiert werden. Alternativ oder zusätzlich kann die Vergleichseinheit auch auf die Kommunikation über den Übertragungskanal Einfluss nehmen und diesen ggf. bei einer hinreichend hohen Wahrscheinlichkeit für eine unerwünschte Übernahme der Identität eines der Teilnehmer selbst übernehmen, geeignet umleiten, neu aufbauen oder unterbrechen.

In einer besonders bevorzugten Ausführungsform umfasst das Verfahren ferner ein Vorgeben einer Startzeit für das Abtasten der Sprachsignale durch eines der Endgeräte, wobei die Sprachsignale ausgehend von der Startzeit an den Endgeräten jeweils zu einem im Wesentlichen gleichen Zeitpunkt oder zu einem um einen Verzögerungswert versetzten Zeitpunkt abgetastet werden. Hierzu werden vorzugsweise die Endgeräte der Teilnehmer synchronisiert, beispielsweise unter Verwendung des Network Time Protokolls (NTP). Ein Endgerät erhält die Rolle eines Servers beispielsweise dadurch, dass die Endgeräte untereinander die Rollen aushandeln oder indem ein Dienstanbieter seinem Endgerät die Rolle des Servers und den Endgeräten der Teilnehmer die Rolle der Clients zuweist. Der Server kann nun die Startzeit festlegen und übermittelt einen entsprechenden Zeitpunkt $t_0$ an alle weiteren Endgeräte. Der Server kann den Zeitpunkt $t_0$ frei vorgeben, dieser sollte jedoch vorteilhafterweise unmittelbar mit dem Gesprächsbeginn zusammenfallen. Der Zeitpunkt $t_0$ kann jedoch auch in Abhängigkeit von anderen Parametern, Faktoren oder Gegebenheiten des Systems, zum Beispiel der Reaktionszeit eines Web-Dienstes oder des Übertragungskanals, oder aufgrund von generellen Überlegungen gewählt werden, welche mit einem gewünschten Zeitpunkt für eine Prüfung der Authentizität der Teilnehmer zusammenhängen, beispielsweise dann, wenn sicherheitskritische Daten während der Kommunikation übermittelt werden sollen. Ferner kann eine Kompensation von Verzögerungen auf dem Übertragungskanal vorgesehen sein, um eine möglichst genaue Synchronisation der Teilnehmer zu erreichen.

Die Endgeräte können zum vereinbarten Zeitpunkt $t_0$ direkt damit beginnen, die jeweiligen Sprachsignale abzutasten. Da es durch die Übertragung über den Übertragungskanal jedoch zu Verzögerungen kommen kann, können die Sprachsignale ebenfalls zu unterschiedlichen Zeitpunkten abgetastet werden, die um einen Verzögerungswert voneinander abweichen. Dieser Verzögerungswert kann von der tatsächlichen Übertragungsverzögerung zwischen dem Server und einem Endgerät abgeleitet werden. So kann zum Beispiel der Server zuerst durch Messung einer Round Trip Time (RTT) bestimmen, wie lange ein Signal für das Zurücklegen der durch den Übertragungskanal definierten Strecke vom Server zum Endgerät und zurück benötigt. Diese Messung kann mehrfach wiederholt werden und aus der Gesamtheit der ermittelten RTT-Zeiten, beispielsweise aus dem Durchschnitt, dem Median oder einer anderen geeigneten Abschätzung, kann der Server einen Verzögerungswert für die Übertragung, beispielsweise eine Single Trip Time (STT) nach $RTT = 2 \cdot STT$, bestimmen und das Endgerät über den Verzögerungswert informieren. Der Server kann dann zum Zeitpunkt $t_0$ und das Client-Endgerät zum Zeitpunkt $t_0 \pm STT$ mit der Abtastung der Sprachsignale beginnen. Die Entscheidung, ob die Abtastung verzögert oder vorgezogen wird, kann davon abhängen, welchen Sprachsignalen aus welcher Quelle bei der Überprüfung der Authentizität eine wesentliche Bedeutung zukommen soll. Sind beispielsweise die Sprachsignale vom Server ausschlaggebend, so kann der Client mit einer Aufzeichnung zum Zeitpunkt $t_0 + STT$ beginnen. Der Server kann jedoch auch das Client-Endgerät anweisen, die Abtastung zu einem Zeitpunkt $t_0 - STT$ zu beginnen, wenn es bei der Authentifikation hauptsächlich auf Sprachsignale ankommt, die von dem Endgerät an den Server übermittelt werden. Der Server kann einen Verzögerungswert $STT_i$ für jedes einzelne Endgerät bestimmen und an dieses Endgerät kommunizieren oder kann aus der Messung der RTTs für alle Endgeräte einen Mittelwert bestimmen und hieraus eine durchschnittliche STT ableiten, um die dann die Aufnahme an jedem Endgerät versetzt wird.

In einer besonders bevorzugten Ausführungsform der vorliegenden Erfindung umfasst das Abtasten der Sprachsignale ein Abtasten eines Sprachsignalabschnitts, der in einen Satz von Fenstern unterteilt wird. Die Fenster definieren hierbei einen kleineren Signalabschnitt und umfassen das entsprechende Sprachsignal. So kann mit der Abtastung des Sprachsignalabschnitts zum vorgegebenen Startzeitpunkt $t_0$ (oder zu einem entsprechend versetzten Zeitpunkt $t_0 \pm STT_i$) begonnen werden, wobei der Sprachsignalabschnitt beispielsweise eine Länge von $\Delta t_m$ haben kann. Der Sprachsignalabschnitt $\Delta t_m$ kann in einen Satz von $n$ Fenstern $F_i$ mit einer Länge von $\Delta t_F$ unterteilt werden, welche in Abhängigkeit von einem Überlappungsfaktor $O_F$ direkt aneinandergrenzen können oder sich überlappen können, wobei $0 \leq O_F \leq 1$ gilt. Die Dauer der Überlappung kann hierbei $O_F \cdot \Delta t_F$ sein. Durch die Verwendung von einzelnen Fenstern kann das Sprachsignal gezielt analysiert und verglichen werden, wodurch die Qualität der nachfolgenden Verarbeitung verbessert werden kann.

In einer weiteren Ausführungsform der vorliegenden Erfindung umfasst jeder Prüfdatensatz mindestens eines der Fenster. Hierbei kann beispielsweise das durch das Fenster definierte abgetastete Sprachsignal in den Prüfdatensatz kopiert werden. Die Prüfdatensätze können mehrere oder den gesamten Satz von Fenstern umfassen. Die den jeweiligen Fenstern zugehörigen Sprachsignale können ebenfalls geeignet gefiltert und vorverarbeitet werden, beispielsweise mittels diverser Fenster-, Störungs- oder Glättungsfilter.

In einer besonders bevorzugten Ausführungsform umfasst das Erzeugen des Prüfdatensatzes ein Berechnen von Stimmmerkmalen aus mindestens einem der Fenster und ein Einfügen der Stimmmerkmale in den Prüfdatensatz. Die Berechnung der Stimmmerkmale kann durch beliebige Verfahren zur Extraktion von Audio-Features erfolgen. Hierbei kann das Signal vorverarbeitet werden. So kann jedes Fenster normalisiert werden, indem die einzelnen Amplituden in Abhängigkeit von einer maximalen lokalen Amplitude eines Fensters und einer maximal zulässigen Amplitude neu berechnet oder mit einem geeigneten Faktor skaliert werden. Darüber hinaus können die Amplituden der niedrigen und der hohen Frequenzen mit einem einfachen digitalen Filter aneinander angeglichen werden (Pre-Emphasis-Verfahren). Das Signal des betrachteten Fensters kann auch mit einer Fenster-Funktion, beispielsweise mit der Hamming-Fenster-Funktion gefiltert werden.

Zur eigentlichen Merkmalsextraktion kann das zu analysierende Signal in einen Frequenzraum transformiert werden, beispielsweise durch Anwendung der Fast Fourier-Transformation (FFT). Aus den Fourier-Koeffizienten können nun Merkmale abgeleitet werden, welche das Sprachsignal in dem betrachteten Fenster charakterisieren. So kann beispielsweise ein Maß für den Rauschanteil des Signals (Compactness), ein Maß für die spektrale Veränderung des Signals (Spectral Flux), eine statistische Standardabweichung des Betragsspektrums (Spectral Variability), weitere statistische Merkmale wie einzelne Momente einer statistischen Verteilung und andere Merkmale berechnet werden. Ferner können weitere Filter- und Merkmalsextraktionsverfahren kombiniert werden, um aussagekräftige Merkmale für das zugrundeliegende Sprachsignal zu gewinnen, beispielsweise die Mel-Skala, Cepstrum und davon abgeleitet die Mel Frequency Cepstral Koeffizienten (MFCC). Ferner können einzelne Filter geeignet parametriert auf einer Filterbank angeordnet werden, um die Merkmale aus den Sprachsignaldaten abzuleiten. Die Parameter der Filter können hierbei vorbestimmt sein, oder für jede Kommunikationssitzung beispielsweise durch den Server deterministisch vorgegeben sein oder es kann eine deterministisch zufällige Parametrierung dadurch erfolgen, dass der Server einen Seed-Wert für Pseudozufallszahlengeneratoren verteilt, welche ausgehend von dem Seed-Wert zufällig, jedoch auf allen Endgeräten gleich, Parameter für die einzelnen Filter und Verarbeitungsschritte generieren.

Die Berechnung der Mel Frequency Cepstral Koeffizienten kann so beispielsweise als MFCC-Algorithmus die folgenden Berechnungsschritte umfassen: 1. Erzeugen eines Hamming-Fensters und Durchführen weiterer Signalvorverarbeitungsschritte, 2. Berechnen der FFT, 3. Bilden des Betragsspektrums, 4. Anwenden einer Filterbank, 5. Logarithmieren der Filterbankwerte und 6. Dekorrelieren mit einer Diskreten Cosinus-Transformation.

Erfindungsgemäß können sowohl einzelne Stimmmerkmale als auch eine Gruppe von Stimmmerkmalen für ein Fenster berechnet werden, die dann insgesamt in den Prüfdatensatz eingefügt werden und für den Vergleich herangezogen werden können.

Vorzugsweise umfasst das Vergleichen ein Bestimmen einer deterministisch zufälligen Auswahl aus dem Satz von Fenstern und ein Bestimmen eines Abstands zwischen den zugehörigen Daten der ausgewählten Fenster aus dem über den Sicherheitskanal gesendeten ersten Prüfdatensatz und dem zweiten Prüfdatensatz. Durch das deterministisch zufällige Bestimmen der einzelnen Fenster, die zum Vergleich herangezogen werden, wird das Verfahren insgesamt robuster und Angriffe auf das Authentifikationsverfahren werden erschwert. Hierzu können, nachdem an allen Endgeräten einander entsprechende Sprachsignalabschnitte $\Delta t_m$ und zugehörige Fenster $F_i$ aufgenommen wurden, deterministisch zufällig die einzelnen Fenster oder die zugehörigen Zeitindizes der zu analysierenden Fenster $F_i$ bestimmt werden. Hierzu kann der von dem Server initial verteilte Seed-Wert oder ein weiterer Seed-Wert herangezogen werden, der von jedem Endgerät zur Initialisierung eines Pseudozufallszahlengenerators verwendet werden kann und so neue Pseudozufallszahlen berechnen kann. Somit sind diese Zahlen allen Teilnehmern bekannt und gleich, jedoch Dritten, insbesondere Angreifern ohne Information über den Seed-Wert nicht bekannt.

Vorzugsweise kann sich die Auswahl der Fenster in zwei Gruppen aufteilen, wobei in der ersten Gruppe diejenigen Fenster angeordnet sein können, die einen gleichen Zeitindex haben und somit einem gleichen (oder um einen Verzögerungswert versetzten) Zeitabschnitt des Sprachsignals entsprechen. In der zweiten Gruppe können zusätzlich Fenster angeordnet sein, die unterschiedliche Zeitindizes haben und somit voneinander abweichenden Zeitabschnitten entsprechen. Bei einem Vergleich der Prüfdatensätze können entsprechend die Fenster aus der ersten Gruppe auf Ähnlichkeit oder Identität und die Fenster aus der zweiten Gruppe auf Unähnlichkeit überprüft werden. Durch diese besonders vorteilhafte Berücksichtigung von Fenstern von unterschiedlichen Zeitpunkten wird die Zuordnungsqualität und insgesamt die Erkennungsrate bei der Authentifikation deutlich erhöht.

Die Bestimmung der deterministisch zufälligen Auswahl aus dem Satz von Fenstern kann dann erfolgen, nachdem der erste Prüfdatensatz und ggf. noch weitere Prüfdatensätze über den Sicherheitskanal empfangen wurden. In diesem Fall können die Prüfdatensätze Daten für alle Fenster aus dem abgetasteten Sprachsignalabschnitt enthalten. Alternativ kann das Bestimmen der Auswahl auch vor dem Erzeugen der Prüfdatensätze erfolgen, so dass in den jeweiligen Prüfdatensatz nur diejenigen Daten eingefügt werden können, welche den zu vergleichenden Fenstern entsprechen. Zwar könnte aus einer Übertragung von lediglich einer Auswahl von Fenstern ein Angreifer einen Hinweis auf Parameter des Verfahrens gewinnen und so potentiell das Authentifikationsverfahren überwinden, dieser potentielle Angriffspunkt ist jedoch im Hinblick auf die Verringerung der erforderlichen Bandbreite des Sicherheitskanals zu bewerten, welcher entsprechend effektiver ausgenutzt werden kann. Darüber hinaus ist auch eine Übertragung von Daten eines gemischten Satzes von Fenster möglich, welcher sowohl Daten der Auswahl der Fenster als auch zufällig eingefügte weitere Daten von Fenstern enthält, so dass die eigentliche Auswahl für einen Angreifer verschleiert bleibt und die erforderliche Bandbreite des Sicherheitskanals trotzdem reduziert werden kann. Ferner kann ein Endgerät lediglich die Daten der ausgewählten Fenster in dem zugehörigen Prüfdatensatz und ein anderes Endgerät die Daten des gesamten Satzes von Fenstern übertragen. Insbesondere kann die Wahl der geeigneten Übertragungstechnik davon abhängig gemacht werden, welche Übertragungskapazität der Sicherheitskanal bietet, so dass beispielsweise bei einer drahtlosen Verbindung lediglich ein reduzierter Datensatz gesendet werden kann.

Durch die deterministisch zufällig ermittelten Zeitindizes der Fenster, werden die jeweils zugehörigen Daten aus dem empfangenen Prüfdatensatz identifiziert und mit einer Kopie des lokalen Prüfdatensatzes auf Übereinstimmung bzw. Abweichung geprüft. Der Vergleich der entsprechenden Daten kann mit einem beliebigen Mustervergleichsansatz erfolgen. Hierzu werden jeweils die den Fenstern entsprechenden Daten als Eingabevektoren $M$ und $N$ aufgefasst,

wobei $M = \{M_0, M_1,...,M_m\}$, $N = \{N_0,N_1...,N_n\}$, wobei $m = n$ oder auch $m \neq n$ sein kann. Zur Bestimmung der Ähnlichkeit oder Unähnlichkeit der beiden Eingabevektoren $M$, $N$ kann eine beliebige Distanzmetrik verwendet werden, welche die Eigenschaften der Audiomerkmale hinreichend berücksichtigt. So kann im einfachsten Fall die euklidische Distanz oder eine entsprechend leicht modifizierte Version verwendet werden, die vorzugsweise Feature-Sequenzen mit unterschiedlicher Länge berücksichtigen. Ebenfalls kann eine erweiterte Version des Nearest Neighbour-Verfahrens als Klassifikationsmechanismus eingesetzt werden. Ebenso können unterschiedliche Distanzmetriken, beispielsweise die Manhatten- oder Hamming-Distanz, verwendet werden, welche Koeffizienten mit geringer und Koeffizienten mit hoher Distanz aufgrund einer exponentiellen Gewichtungen besser differenzieren können. Vorzugsweise kann ein Dynamic Time Warping (DTW)-Algorithmus verwendet werden, um die Feature-Vektoren zu vergleich. DTW berechnet für die Eingabevektoren $M$, $N$ mit unterschiedlicher Länge $m \neq n$ jeweils eine Distanzmatrix, welche zu jedem Eintrag $(i, j)$ die Distanz zwischen dem $i$-ten Element $M_i$ des Eingabevektors $M$ und dem $j$-ten Element $N_j$ des Eingabevektors $N$ wiedergibt. Als Distanzmetrik für die Distanzmatrix können hierbei unterschiedliche Verfahren eingesetzt werden, wobei die beste Übereinstimmung zwischen zwei Vektoren $M$, $N$ einem kürzesten Pfad $P$ von einer unteren linken Ecke $(1,1)$ zur oberen Ecke bei $(m,n)$ entspricht. Die Länge des Pfades ist dabei die Summe aller im Pfad enthaltenen Werte der Matrix. Es ist klar, dass der Mustervergleich in Abhängigkeit von den berechneten Merkmalen für jedes Fenster mehrmals durchgeführt werden kann.

Die Ergebnisse des Mustervergleichs können beispielsweise mit dem Weighted Majority Voting-Verfahren klassifiziert werden, um eine Aussage über die Authentizität des Teilnehmers und des Übertragungskanals zu erhalten. Hierzu können die einzelnen Teilergebnisse für die einzelnen Merkmale und das Gesamtergebnis mit Schwellwerten verglichen werden. Übersteigt oder Unterschreitet ein Teilergebnis oder das Gesamtergebnis den jeweiligen Schwellwert, so ist der Kanal und der Teilnehmer entweder als authentisch oder als nicht authentisch anzusehen.

In einer bevorzugten Ausführungsform der vorliegenden Erfindung umfasst das Verfahren ferner ein Verschlüsseln des Sicherheitskanals. Hierdurch kann die Sicherheit des Systems weiter erhöht werden. Es ist jedoch ebenfalls klar, dass das Verfahren insgesamt nicht von einer bestimmten Verschlüsselung oder Sicherung des Sicherheitskanals abhängig sein muss, solange die Prüfdatensätze über einen ausreichend gesicherten und vertrauenswürdigen Kanal ausgetauscht werden, um eine Manipulation durch Dritte zu verhindern. Insbesondere reduzieren die deterministisch zufällig bestimmten Vergleichsfenster, sowie die jeweils beidseitig abgetasteten Sprachsignale die Angriffsmöglichkeiten auf das erfindungsgemäße Verfahren bereits deutlich. Der Sicherheitskanal kann eine beliebige, vorzugsweise paketbasierte gesicherte Verbindung sein. Der Sicherheitskanal kann jedoch auch zusätzlich oder alternativ zu der Verschlüsselung noch durch weitere Maßnahmen gegen unterschiedliche Angriffe gesichert und abgeschirmt sein.

In einer weiteren bevorzugten Ausführungsform umfasst das Verfahren ferner ein Feststellen einer Identität mindestens eines Teilnehmers durch Auslesen von Sicherheitsmerkmalen aus einem auf den Teilnehmer personalisierten Datenspeicher und Übertragen der Sicherheitsmerkmale an einen Server.

Vorzugsweise umfasst das Auslesen ein Auslesen von Daten auf einem Personalausweis. Hierzu kann der Teilnehmer über einen elektronischen Personalausweis und ein entsprechendes Lesegerät mit geeigneter Funktionalität verfügen, beispielsweise ein nPA-Lesegerät und eine Applikation AusweisApp, oder ein NFC (Near Field Communication)-fähiges Smartphone oder anderes mobiles Endgerät, das direkt mit einem RFID-Chip des elektronischen Personalausweises kommunizieren kann, um die Daten auszulesen, um den Teilnehmer über eine Sicherheitsinfrastruktur zu authentifizieren. Hierzu kann die Authentifikation des Teilnehmers zunächst mittels einer entsprechend ausgelesenen elektronischen Identität (eID) des elektronischen Personalausweises erfolgen. Nach der anfänglichen Authentifikation wird erfindungsgemäß die Authentizität kontinuierlich durch das erfindungsgemäße Verfahren überprüft und festgestellt. Hierdurch kann eine Zwei-Faktoren-Authentifizierung bereitgestellt werden, wobei die elektronische Identität und der Vergleich der Sprachsignale durch die Prüfdatensätze kombiniert zur Authentifizierung eingesetzt werden können. Insbesondere kann somit zuerst die Identität des Teilnehmers mit dem elektronischen Personalausweis und einer zugehörigen Sicherheitsinfrastruktur festgestellt werden und dann vorzugsweise mit den gleichen Softwarekomponenten durch eine dauerhafte Überwachung des Telefonats sichergestellt werden, dass sich die Identität des Teilnehmers nicht mehr ändert. Somit kann die Sicherheitsinfrastruktur, welche zur anfänglichen Überprüfung der Identität des Teilnehmers verwendet werden kann, ebenfalls dazu genutzt werden, um den Sicherheitskanal zum Austausch der Prüfdatensätzen zwischen den Teilnehmern bereitzustellen. Der Sicherheitskanal kann jedoch auch über ein anderes Übertragungsmedium und getrennt von der Sicherheitsinfrastruktur aufgebaut sein.

In einer weiteren vorteilhaften Ausführungsform umfasst das Verfahren ferner ein Berechnen eines Wasserzeichens. Vorzugsweise kann das Wasserzeichen im Rahmen der Erzeugung des Prüfdatensatzes berechnet werden. Ferner kann das Wasserzeichen in den Prüfdatensatz eingebettet werden. Das Wasserzeichen kann jedoch auch zusätzlich zu Merkmalen des Prüfdatensatzes berechnet werden und direkt in das Telefongespräch eingebettet werden. So kann beispielsweise nach einer initialen Überprüfung der Identität mindestens eines der Teilnehmer z.B. durch einen elektronischen Personalausweis, ein kontinuierlich erzeugtes Audio-Wasserzeichen oder robuster Hash-Wert vom Endgerät des Teilnehmers beispielsweise über den Sicherheitskanal übertragen oder in das Telefongespräch eingebettet werden und vom Endgerät des anderen Teilnehmers kontinuierlich ausgelesen und kontrolliert werden. Wenn das Wasserzeichen fehlt oder falsch ist, kann die Verbindung als nicht authentisch beurteilt werden. Das Wasserzeichen kann z.B. einen deterministisch zufälligen Wert enthalten, der beiden Teilnehmern aufgrund eines am Anfang vereinbarten Seed-Werts bekannt sein kann und der regelmäßig neu berechnet werden kann. Die Wasserzeichen können mit einem beliebigen Verfahren zur Berechnung von Audio-Wasserzeichen berechnet werden, welche auf die Übertragung von Sprache bei Telefonie parametriert sein können. Die vorliegende Erfindung ist jedoch nicht auf eine bestimmte Ausgestaltung der Wasserzeichen oder Hashes beschränkt.

Erfindungsgemäß wird ferner ein computer-lesbares Medium mit darauf gespeicherten Befehlen bereitgestellt, die, wenn sie von einem Computersystem ausgeführt werden, das Computersystem dazu veranlassen, das erfindungsgemäße Verfahren auszuführen. Insbesondere können die gespeicherten Befehle von den einzelnen Endgeräten aus dem computer-lesbaren Medium ausgelesen werden, so dass jedes Endgerät dazu eingerichtet wird, Sprachsignale, die über einen Übertragungskanal übertragen werden, abzutasten und einen Prüfdatensatz aus dem abgetasteten Sprachsignal zu erzeugen. Darüber hinaus kann eine Infrastruktur in dem Computersystem die Befehle auf dem computer-lesbaren Medium auslesen, so dass die Infrastruktur dazu eingerichtet wird, den Übertragungskanal zwischen einem ersten und mindestens einem zweiten Endgerät von Teilnehmern des Telefoniedienstes einzurichten, sowie einen Sicherheitskanal bereitzustellen, über den mindestens ein erster Prüfdatensatz des ersten Endgeräts von dem ersten Endgerät aus gesendet wird, wobei die Infrastruktur insgesamt dazu eingerichtet wird, den mindestens einen über den Sicherheitskanal gesendeten ersten Prüfdatensatz mit mindestens einem zweiten Prüfdatensatz des zweiten Endgeräts zu vergleichen.

Erfindungsgemäß wird ebenfalls ein System zur Authentifikation von Teilnehmern eines Telefoniedienstes zur Verfügung gestellt, das einen Übertragungskanal umfasst, der ein erstes und mindestens ein zweites Endgerät von Teilnehmern des Telefoniedienstes verbindet. Darüber hinaus sind an jedem Endgerät eine Abtastvorrichtung und eine Verarbeitungseinheit vorgesehen, wobei die Abtastvorrichtung eingerichtet ist, Sprachsignale, die über den Übertragungskanal übertragen werden, an dem jeweiligen Endgerät abzutasten, und die Verarbeitungseinheit eingerichtet ist, aus den abgetasteten Sprachsignalen jeweils einen Prüfdatensatz zu erzeugen. Das System umfasst ferner einen Sicherheitskanal, der an das erste Endgerät gekoppelt ist und über den mindestens ein erster Prüfdatensatz des ersten Endgeräts gesendet wird. Ferner umfasst das System eine Vergleichseinheit, die eingerichtet ist, den mindestens einen über den Sicherheitskanal gesendeten ersten Prüfdatensatz mit mindestens einem zweiten Prüfdatensatz des zweiten Endgeräts zu vergleichen.

Das erfindungsgemäße System ermöglicht eine einfache und sichere Authentifikation von Teilnehmern des Telefoniedienstes, welche ohne umständliche Trainingseinheiten auskommen und wirkungsvoll die Authentifikation der Teilnehmer des Telefoniedienstes während der Sprachübertragung durchführen kann.

Die Sprachsignale, die über den Übertragungskanal übertragen und von den Abtastvorrichtungen an den jeweiligen Endgeräten abgetastet werden, können sowohl die eingehenden als auch die ausgehenden Sprachsignale des Gesprächs umfassen, wobei die am ersten Endgerät abgetasteten Sprachsignale, aus denen der erste Prüfdatensatz erzeugt wird, im Wesentlichen den am zweiten Endgerät abgetasteten Sprachsignalen entsprechen, aus denen der zweite Prüfdatensatz erzeugt wird. In einer Ausführungsform können jedoch auch die eingehenden analogen Sprachsignale abgetastet und ausgewertet werden, wobei dann entsprechend der zweite Prüfdatensatz aus den vom ersten Endgerät empfangenen abgetasteten Sprachsignalen am zweiten Endgerät gewonnen wird. Somit kann der mindestens eine zweite Prüfdatensatz zumindest aus Sprachsignalen erzeugt sein, die über den Übertragungskanal vom zweiten Teilnehmer aus gesendet werden und Sprachsignalen entsprechen, die beim ersten Teilnehmer ankommen, aus denen der mindestens eine erste Prüfdatensatz erzeugt sein kann. Eventuell hierdurch auftretende Divergenzen zwischen den jeweils abgetasteten Sprachsignalen des Gesprächs auf Sprecher- und Empfängerseite, beispielsweise dem zweiten Endgerät und dem ersten Endgerät, können durch geeignete Konstruktion der Prüfdatensätze kompensiert werden. Zum Beispiel können Zeitabschnitte, Entscheidungsschwellwerte für die Prüfung der Zeitabschnitte und Regeln für die Verknüpfung der Prüfergebnisse zum Prüfdatensatz geeignet definiert sein, um die Divergenzen zu kompensieren.

In einer bevorzugten Ausführungsform der vorliegenden Erfindung ist das zweite Endgerät an den Sicherheitskanal und die Vergleichseinheit gekoppelt, um den ersten Prüfdatensatz zu empfangen und den über den Sicherheitskanal empfangenen ersten Prüfdatensatz mit dem zweiten Prüfdatensatz zu vergleichen. Hierzu kann die Vergleichseinheit als ein dediziertes Hardware-Modul oder als ein Software-Modul in dem zweiten Endgerät ausgebildet sein. Hierbei kann effektiv das zweite Endgerät durch den Vergleich des über den Sicherheitskanal empfangenen ersten Datensatzes mit dem lokalen Prüfdatensatz die Authentizität des Teilnehmers am ersten Endgerät sowie die Authentizität und Integrität des Übertragungskanals ermitteln. Entsprechend kann die Authentizität des Teilnehmers und des Übertragungskanals zumindest teilweise von einem Vergleichsergebnis der Vergleichseinheit abhängen.

In einer weiteren bevorzugten Ausführungsform ist das zweite Endgerät ferner eingerichtet, den zweiten Prüfdatensatz über den Sicherheitskanal zu senden, und das erste Endgerät ist ferner eingerichtet, den zweiten Prüfdatensatz über den Sicherheitskanal zu empfangen, wobei das System ferner eine weitere Vergleichseinheit umfasst, die an das erste Endgerät gekoppelt ist, um den über den Sicherheitskanal empfangenen zweiten Prüfdatensatz mit dem ersten Prüfdatensatz des ersten Endgeräts zu vergleichen. Hiermit kann durch weitere Vergleiche durch die weiteren Teilnehmer mit deren Prüfdatensätzen ebenfalls die Authentizität des Teilnehmers am zweiten Endgerät überprüft werden. Entsprechend kann über den Sicherheitskanal auch jeder weitere Prüfdatensatz von weiteren Endgeräten von weiteren Teilnehmern gesendet und an den jeweils anderen Endgeräten mit einer Kopie des jeweils lokalen Prüfdatensatzes verglichen werden. Somit kann die Authentizität sowohl des Teilnehmers am ersten Endgerät durch den Teilnehmer am zweiten Endgerät als auch die Authentizität des Teilnehmers am zweiten Endgerät durch den Teilnehmer am ersten Endgerät überprüft werden und so eine gegenseitige Authentifikation der Teilnehmer und des Übertragungskanals unabhängig voneinander festgestellt werden. Hierdurch kann die Kommunikation unabhängig voneinander als vertrauenswürdig eingeschätzt oder entsprechend abgelehnt oder sogar abgebrochen werden. Die gegenseitige Authentifikation kann auch von weiteren Teilnehmern des Telefoniedienstes vorgenommen werden, wobei durch den Vergleich des jeweils empfangenen Prüfdatensatzes mit der Kopie des eigenen lokalen Prüfdatensatzes die Authentizität der jeweiligen Gegenstelle überprüft werden kann.

In einer weiteren bevorzugten Ausführungsform ist das zweite Endgerät ebenfalls dazu eingerichtet, den zweiten Prüfdatensatz über den Sicherheitskanal zu senden, und die Vergleichseinheit ist an den Sicherheitskanal gekoppelt und eingerichtet, beide gesendeten Prüfdatensätze zu empfangen und den über den Sicherheitskanal gesendeten ersten Prüfdatensatz mit dem über den Sicherheitskanal gesendeten zweiten Prüfdatensatz zu vergleichen. Die Vergleichseinheit kann auch weitere Prüfdatensätze von weiteren Endgeräten empfangen und in den Vergleich mit einbeziehen. Somit kann die Authentifikation des Gesamtsystems durch eine zentrale Vergleichseinheit, welche beispielsweise in eine Sicherheitsinfrastruktur integriert sein kann, durchgeführt werden.

In einer weiteren Ausführungsform der vorliegenden Erfindung ist durch eines der Endgeräte eine Startzeit für die Abtastung vorgegeben und die Abtastvorrichtungen tasten ausgehend von der Startzeit die Sprachsignale an den Endgeräten jeweils zu einem im Wesentlichen gleichen Zeitpunkt oder zu einem um einen Verzögerungswert versetzten Zeitpunkt ab. Zur Synchronisation der einzelnen Endgeräte kann ein Timing-Server mit einem geeigneten Synchronisationsprotokoll, beispielsweise NTP verwendet werden.

In einer weiteren Ausführungsform der vorliegenden Erfindung tastet die Abtastvorrichtung einen Sprachsignalabschnitt ab, der in einen Satz von Fenstern unterteilt ist.

In einer noch weiteren Ausführungsform der vorliegenden Erfindung umfasst jeder Prüfdatensatz mindestens eines der Fenster.

Gemäß einer weiteren Ausführungsform der vorliegenden Erfindung umfasst der aus den Sprachsignalen erzeugte Prüfdatensatz Stimmmerkmale, die aus mindestens einem der Fenster berechnet sind. Für jedes Fenster kann genau ein Stimmmerkmal berechnet werden oder es können mehrere Stimmmerkmale berechnet und in den Prüfdatensatz eingefügt werden.

In einer weiteren vorteilhaften Ausführungsform der vorliegenden Erfindung ist die Vergleichseinheit ferner dazu eingerichtet, eine deterministisch zufällige Auswahl aus dem Satz von Fenstern zu bestimmen und einen Abstand zwischen den zugehörigen Daten der ausgewählten Fenster aus dem über den Sicherheitskanal gesendeten ersten Prüfdatensatz und dem zweiten Prüfdatensatz zu bestimmen. Hierbei können die übertragenen Prüfdatensätze die Daten für alle Fenster umfassen, so dass aus der deterministisch zufälligen Auswahl durch entsprechende Indices die zugehörigen Daten für das zu betrachtende Fenster extrahiert werden und bei dem Vergleich berücksichtigt werden können. Die Vergleichseinheit kann jedoch auch an die Verarbeitungseinheit des Endgeräts gekoppelt sein und so die Verarbeitungseinheit dazu veranlassen, lediglich die Daten für diejenigen Fenster zu erzeugen, die der deterministisch zufälligen Auswahl von Fenstern entsprechen. Da die deterministisch zufällige Auswahl beispielsweise durch die Verteilung eines Seed-Werts auf jedem Endgerät zum selben Ergebnis führt, werden an jedem Endgerät lediglich die zum Vergleich benötigten Fenster weiter analysiert und in dem Prüfdatensatz über den Sicherheitskanal gesendet. Hierdurch kann die Verarbeitungszeit reduziert und die Übertragungskapazität des Sicherheitskanals besser ausgenutzt werden.

In einer bevorzugten Ausführungsform der vorliegenden Erfindung ist der Übertragungskanal ein analoger oder digitaler Telefonkanal oder stellt eine paketbasierte Verbindung, vorzugsweise eine Internet-Telefonie- oder Voice over IP-Verbindung bereit. Dadurch, dass der erfindungsgemäße Authentifikationsansatz keinen bestimmten Übertragungskanal zur Übertragung der Sprache erfordert, kann der Ansatz besonders vorteilhaft auch bei bereits bestehenden Telefoninfrastrukturen und sonstigen Telefoniediensten verwendet werden, ohne dass Änderungen der Infrastruktur notwendig wären. Somit kann der Ansatz sowohl bei klassischen, vermittlungsorientierten Telefonverbindungen als auch bei paketbasierten Telefonverbindungen direkt eingesetzt werden.

In einer weiteren Ausführungsform der vorliegenden Erfindung ist der Sicherheitskanal zur Übertragung von digitalen Daten eingerichtet. Beispielsweise kann der Sicherheitskanal eine gewöhnliche paketbasierte Verbindung über ein Netzwerk sein. Vorzugsweise ist der Sicherheitskanal jedoch verschlüsselt. Alternativ oder zusätzlich können andere Sicherungsmaßnahmen vorgesehen sein, um den Sicherheitskanal möglichst abhörsicher und störsicher auszugestalten.

In einer weiteren vorteilhaften Ausführungsform der vorliegenden Erfindung umfasst das System ferner mindestens eine Lesevorrichtung, die mit einem entsprechenden Endgerät eines Teilnehmers gekoppelt ist und eingerichtet ist, Sicherheitsmerkmale aus einem auf den Teilnehmer personalisierten Datenspeicher auszulesen, wobei die Lesevorrichtung mit einem Server verbunden ist und eingerichtet ist, die ausgelesenen Sicherheitsmerkmale an den Server zu senden, um die Identität des Teilnehmers festzustellen. Der Server kann Teil einer Sicherheitsinfrastruktur sein, die dazu eingerichtet ist, die elektronischen Identitäten von Teilnehmern zu prüfen. So kann die Sicherheitsinfrastruktur von einer vertrauenswürdigen Stelle bereitgestellt sein. Entsprechend kann auch der Sicherheitskanal von der Sicherheitsinfrastruktur bereitgestellt sein und mit dem Kommunikationskanal übereinstimmen, mit dem die Lesevorrichtung an dem Endgerät mit dem Server zur Überprüfung der Identität kommuniziert. Der Sicherheitskanal kann jedoch auch getrennt von diesem Kommunikationskanal sein und kann auch gänzlich getrennt von der Sicherheitsinfrastruktur aufgebaut sein.

Vorzugsweise ist der Datenspeicher in einem Personalausweis angeordnet und die Lesevorrichtung ist zum Auslesen der Daten auf dem Personalausweis eingerichtet. Es ist jedoch verständlich, dass der Datenspeicher in einer anderen Art und Weise bereitgestellt sein kann, zum Beispiel auf Signaturkarten oder als dedizierter Chip, der von einer vertrauenswürdigen Stelle ausgestellt ist, um eine Überprüfung der Identität des Teilnehmers zu ermöglichen.

In einer weiteren Ausführungsform ist die Verarbeitungseinheit ferner dazu eingerichtet, ein Wasserzeichen zu berechnen.

Erfindungsgemäß wird ferner eine Vorrichtung zur Authentifikation von Teilnehmern eines Telefoniedienstes bereitgestellt, die ein erstes Endgerät eines Teilnehmers, das über einen Übertragungskanal mit mindestens einem zweiten Endgerät verbunden ist, eine Abtasteinheit, die eingerichtet ist, Sprachsignale, die über den Übertragungskanal übertragen werden, an dem ersten Endgerät abzutasten, und eine Verarbeitungseinheit umfasst, die eingerichtet ist, aus den abgetasteten Sprachsignalen einen ersten Prüfdatensatz zu erzeugen. Das erste Endgerät ist ferner an einen Sicherheitskanal gekoppelt, über den der erste Prüfdatensatz und/oder mindestens ein zweiter Prüfdatensatz gesendet wird, der an dem zweiten Endgerät aus dem dort abgetasteten Sprachsignal erzeugt wird, wobei der über den Sicherheitskanal gesendete Prüfdatensatz mit dem anderen verglichen wird.

In einer bevorzugten Ausführungsform der vorliegenden Erfindung wird der erste Prüfdatensatz über den Sicherheitskanal von dem ersten Endgerät aus gesendet und das zweite Endgerät ist an den Sicherheitskanal gekoppelt, um den ersten Prüfdatensatz zu empfangen und um den über den Sicherheitskanal empfangenen ersten Prüfdatensatz mit dem zweiten Prüfdatensatz zu vergleichen. Hiermit kann an dem zweiten Endgerät die Authentizität des Teilnehmers an der erfindungsgemäßen Vorrichtung überprüft werden.

Darüber hinaus kann in einer weiteren bevorzugten Ausführungsform der vorliegenden Erfindung der zweite Prüfdatensatz über den Sicherheitskanal von dem zweiten Endgerät aus gesendet werden und das erste Endgerät empfängt den zweiten Prüfdatensatz über den Sicherheitskanal, wobei die Vorrichtung ferner eine Vergleichseinheit umfasst, die an das erste Endgerät gekoppelt ist, um den über den Sicherheitskanal empfangenen zweiten Prüfdatensatz mit dem ersten Prüfdatensatz zu vergleichen. Hiermit kann eine beidseitige Überprüfung der Authentizität sowohl des Teilnehmers an der Vorrichtung als auch des Teilnehmers am zweiten Endgerät durchgeführt werden. Durch den Austausch von weiteren Prüfdatensätzen von weiteren Endgeräten, die über den Übertragungskanal miteinander gekoppelt sind, kann insbesondere der Teilnehmer an der Vorrichtung eine gegenseitige Überprüfung der Authentizität der weiteren Teilnehmer und somit die Integrität des Übertragungskanals durchführen.

In einer weiteren bevorzugten Ausführungsform der vorliegenden Erfindung tastet die Abtastvorrichtung einen Sprachsignalabschnitt ab, der in einen Satz von Fenstern unterteilt ist.

Vorzugsweise umfasst der aus den Sprachsignalen erzeugte Prüfdatensatz mindestens eines der Fenster und/oder Stimmmerkmale, die aus mindestens einem der Fenster berechnet sind.

In einer besonders vorteilhaften Ausführungsform der vorliegenden Erfindung ist die Vergleichseinheit ferner eingerichtet, eine deterministisch zufällige Auswahl aus dem Satz von Fenstern zu bestimmen und einen Abstand zwischen den zugehörigen Daten der ausgewählten Fenster aus dem über den Sicherheitskanal empfangenen zweiten Prüfdatensatz und dem ersten Prüfdatensatz zu bestimmen.

In einer weiteren bevorzugten Ausführungsform der vorliegenden Erfindung umfasst die Vorrichtung ferner eine Lesevorrichtung, die an das Endgerät des Teilnehmers gekoppelt ist und eingerichtet ist, Sicherheitsmerkmale aus einem auf den Teilnehmer personalisierten Datenspeicher auszulesen, wobei die Lesevorrichtung mit einem Server verbunden ist und eingerichtet ist, die ausgelesenen Sicherheitsmerkmale an den Server zu senden, um die Identität des Teilnehmers festzustellen.

Vorzugsweise ist der Datenspeicher in einem Personalausweis angeordnet und die Lesevorrichtung zum Auslesen der Daten auf dem Personalausweis eingerichtet.

Weitere Vorteile und Merkmale des erfindungsgemäßen Verfahrens, des Systems und der Vorrichtung zur Authentifikation von Teilnehmern eines Telefoniedienstes ergeben sich aus der folgenden Beschreibung, in der die Erfindung anhand von Ausführungsbeispielen unter Bezugnahme auf die beigefügten Zeichnungen näher erläutert wird. Darin zeigen:

Figur 1 ein Kommunikationssystem zur Authentifikation von Teilnehmern gemäß einer Ausführungsform der vorliegenden Erfindung,

Figur 2 ein Zeitablaufdiagramm, das ein Verfahren gemäß einer Ausführungsform der vorliegenden Erfindung mit zwei Endgeräten darstellt,

Figur 3 ein Zeitablaufdiagramm, das ein Verfahren gemäß einer weiteren Ausführungsform der vorliegenden Erfindung mit zwei Endgeräten darstellt,

Figur 4 ein Flussdiagramm, das ein Verfahren zur Authentifikation gemäß einer Ausführungsform der vorliegenden Erfindung darstellt,

Figur 5 ein Zeitablaufdiagramm, das das jeweils abgetastete Sprachsignal und eine Unterteilung in Fenster sowie einen Vergleich der Fenster gemäß einer Ausführungsform der vorliegenden Erfindung veranschaulicht,

Figur 6A und Figur 6B zeigen zwei Ausführungsformen eines Prüfdatensatzes gemäß Ausführungsformen der vorliegenden Erfindung,

Figur 7 zeigt ein Flussdiagramm, das Aspekte eines Merkmalsvergleichs gemäß einer Ausführungsform der vorliegenden Erfindung darstellt, und

Figur 8 ein Klassendiagramm einer software-technischen Realisierung gemäß einer Ausführungsform der vorliegenden Erfindung.

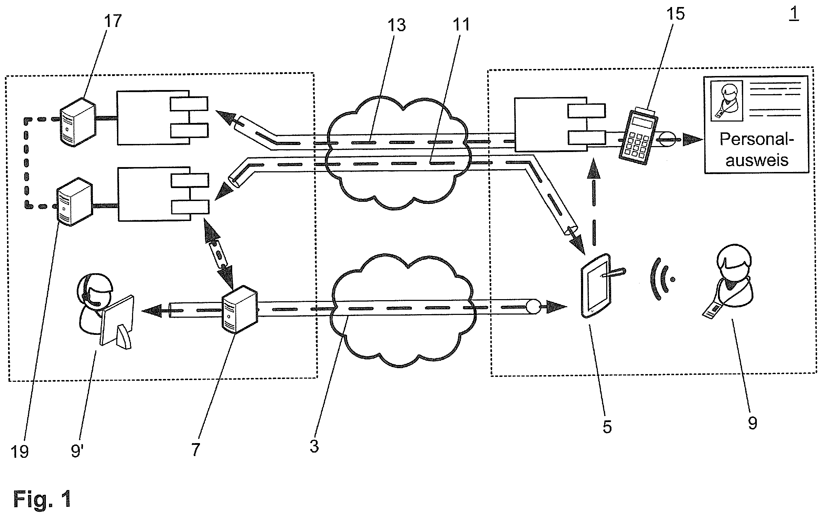

Figur 1 zeigt ein Kommunikationssystem zur Authentifikation von Teilnehmern eines Telefoniedienstes gemäß einer Ausführungsform der vorliegenden Erfindung. Das System 1 umfasst einen Übertragungskanal 3, der ein Endgerät 5 eines Teilnehmers mit einer Gegenstelle 7 verbindet. Der Übertragungskanal 3 kann ein Telefonkanal sein und insbesondere ein klassischer vermittlungsbasierter, analoger oder digitaler Telefonkanal sein oder eine paketbasierte Telekommunikation zwischen dem Endgerät 5 und der Gegenstelle 7 ermöglichen. Der Teilnehmer 9 am Endgerät 5 kann über das Endgerät 5 mit einem Teilnehmer 9' an der Gegenstelle 7 kommunizieren. Beispielsweise kann der Teilnehmer 9 ein Kunde einer Online-Bank sein und der Teilnehmer 9' kann ein Mitarbeiter oder Kundenbetreuer der Online-Bank sein. Wie in Figur 1 gezeigt, kann das Endgerät 5 ein mobiles Telefon, ein Smartphone, ein Pad, ein Tablet-PC oder eine andere mobile Kommunikationsvorrichtung sein, die zur Sprachübertragung eingerichtet ist. Das Endgerät 5 kann ferner ein ortsfestes, drahtloses oder drahtgebundenes Telefon oder eine Telefonanlage sein, über die der Teilnehmer 9 kommunizieren kann. An der Gegenstelle 7 kann ein beliebiges Endgerät an dem Übertragungskanal 3 angeschlossen sein, beispielsweise ein gewöhnlicher drahtgebundener Telefonapparat oder eine Telefonanlage, welche der Teilnehmer 9' beispielsweise über ein Headset bedienen kann. Das Endgerät an der Gegenstelle 7 kann ebenfalls eine zur Kommunikation eingerichtete Rechenanlage sein, beispielsweise ein Kommunikationsserver, der mit einem Telefon des Teilnehmers 9' kommuniziert. Es ist ferner klar, dass das Endgerät an der Gegenstelle 7 ebenfalls eines der Endgeräte 5 sein kann. Insbesondere ist die vorliegende Erfindung nicht auf genau ein Endgerät oder eine bestimmte Ausgestaltung eines Endgeräts beschränkt. Vielmehr sind weitere Ausgestaltungen und Kombinationen denkbar und die Erfindung ist in dieser Hinsicht nicht beschränkt.

Das System 1 weist ferner einen Sicherheitskanal 11 auf, der das Endgerät 5 des Teilnehmers 9 mit der Gegenstelle 7 zusätzlich zum Übertragungskanal 7 verbindet und vorzugsweise zur Übertragung von Daten, beispielsweise paketbasierten Daten eingerichtet ist. Ein weiterer Kommunikationskanal 13 verbindet darüber hinaus ein Lesegerät 15 mit einem Server 17. Das Lesegerät 15 kann dazu eingerichtet sein, einen Datenspeicher auf einem Personalausweis des Teilnehmers 9 auszulesen und so in Kommunikation mit dem Server 17 die Identität des Teilnehmers 9 festzustellen. Ferner kann das Lesegerät 15 weitere und andere Authentifikationsmerkmale des Teilnehmers 9 von dem Personalausweis oder aus einem andere personalisierten Datenspeicher, beispielsweise aus einer Signaturkarte auszulesen. Das Lesegerät 15 kann jedoch auch beispielsweise als eine eingebaute Schnittstelle auf einem Smartphone oder einem anderen mobilen Gerät und somit als Bestandteil des Endgeräts 5 realisiert sein. Ferner kann das Lesegerät 15 ebenfalls als eine NFC (Near Field Communication)-Schnittstelle, beispielsweise in einem Smartphone oder einem anderen mobilen Gerät realisiert sein, welche direkt mit einem RFID-Chip auf dem Personalausweis kommunizieren kann.

Wie dargestellt, können die Kanäle 3, 11, 13 voneinander unabhängig aufgebaut sein und eine Verbindung beispielsweise über getrennte Kommunikationsnetze bereitstellen. Die Kanäle 11 und 13 können jedoch auch gemeinsam über eine Sicherheitsinfrastruktur geführt werden. Entsprechend kann auch der Übertragungskanal 3 in demselben Netz der Sicherheitsinfrastruktur aufgebaut sein.

Die Authentizität der Teilnehmer 9, 9' wird insbesondere nach einer anfänglichen Überprüfung der Identität des Teilnehmers 9 durch den Server 17 während der Kommunikation kontinuierlich dadurch geprüft, dass Sprachsignale sowohl am Endgerät 5 als auch an der Gegenstelle 7 abgetastet werden und aus den abgetasteten Sprachsignalen jeweils ein Prüfdatensatz erzeugt wird, in den Stimmmerkmale und andere messbare Eigenschaften des Gesprächssignals einfließen. Hierdurch kann insbesondere sichergestellt werden, dass sich die Identität der Teilnehmer 9, 9' nicht ändert. Hierzu können auf beiden Seiten der Kommunikation aufgrund einer erfolgten Synchronisation dieselben längeren Sprachsignalabschnitte betrachtet werden. Darin enthalten sind kürzere Zeitabschnitte oder Fenster, die die kleinste Einheit der Auswertung bilden. Die erhaltenen Prüfdatensätze werden über den Sicherheitskanal 11 zur Gegenseite übermittelt. Auf der Gegenseite werden diese mit dem Ergebnis der Analyse verglichen, die aus dem dort aufgezeichneten Telefongespräch unter den gleichen Randbedingungen erhalten wurden.

Der Teilnehmer 9 kann das Endgerät 5 entsprechend derart einrichten, dass der lokale Prüfdatensatz über den Sicherheitskanal 11 an die Gegenstelle 7 gesendet wird. Wenn die Gegenstelle 7 den Prüfdatensatz vom Endgerät 5 empfängt, kann sie den empfangenen Prüfdatensatz mit dem lokalen Prüfdatensatz vergleichen. Hierzu kann die Gegenstelle 7 an eine Vergleichseinheit 19 gekoppelt sein, welche die beiden Prüfdatensätze empfängt und auf Abweichungen und Übereinstimmungen überprüft. Ferner kann die Vergleichseinheit 19 lediglich dazu eingerichtet sein, den Prüfdatensatz von Endgerät 5 über den Sicherheitskanal 11 zu empfangen und diesen an das Endgerät oder die Gegenstelle 7 des Teilnehmers 9' weiterzuleiten, wobei das Endgerät oder die Gegenstelle 7 den lokalen Prüfdatensatz mit dem von der Vergleichseinheit 19 empfangenen Prüfdatensatz auf Abweichungen und Übereinstimmungen überprüfen kann. Bei Übereinstimmung der beiden Prüfdatensätze kann die Gegenstelle 7 ermitteln, dass der Teilnehmer 9 als authentisch gilt und dies entsprechend dem Teilnehmer 9' signalisieren. Hiermit kann beispielsweise ein Dienstanbieter, wie zum Beispiel die Online-Bank sicherstellen, dass die Kommunikation über den Übertragungskanal 3 kontinuierlich mit dem anfänglich identifizierten Teilnehmer 9 stattfindet.

Alternativ oder zusätzlich kann auch der an der Gegenstelle 7 erzeugte Prüfdatensatz über den Sicherheitskanal 11 an das Endgerät 5 des Teilnehmers 9 übertragen werden. Zum Vergleich des übertragenen Prüfdatensatzes mit dem lokalen Prüfdatensatz kann das Endgerät 5 eine integrierte Vergleichseinheit umfassen, die als ein Software-Modul auf dem Endgerät 5 installiert und ausgeführt werden kann, als ein Hardware-Modul an das Endgerät 5 gekoppelt sein kann und/oder als eine Kombination aus Hardware und Software an das Endgerät 5 gekoppelt sein kann, um die Prüfdatensätze zu vergleichen. Das Endgerät 5 kann über die Vergleichseinheit den über den Sicherheitskanal 11 empfangenen Prüfdatensatz mit dem lokalen Prüfdatensatz vergleichen und hieraus bestimmen, ob der Teilnehmer 9' an der Gegenstelle 7 und somit der Übertragungskanal 3 authentisch ist. Durch diesen Vergleich kann der Teilnehmer 9 feststellen, ob die Telekommunikation nach wie vor mit demselben Teilnehmer 9' stattfindet und ob der Übertragungskanal 3 entsprechend von keinem Dritten oder einem potentiellen Angreifer kompromittiert und umgeleitet worden ist, um beispielsweise an weitere Authentifikationsmerkmale des Teilnehmers 9 zu gelangen.

Mit Hilfe einer Sicherheitsinfrastruktur, die für den Einsatz mit einem elektronischen Personalausweis zur Verfügung gestellt sein kann, kann ein verschlüsselter Kanal über eine Netzwerkverbindung aufgebaut werden. So kann in dem in Figur 1 gezeigten beispielhaften System 1 ein Kunde mit einer Bank telefonieren. Vorher kann sich der Kunde beispielsweise mit einem elektronischen Personalausweis (nPA) über eine nPA-Sicherheitsinfrastruktur bei der Bank authentifizieren. Zwischen dem Kunden und der Bank besteht außerdem eine sichere Verbindung durch den Sicherheitskanal 11, beispielsweise über den Webservice der nPA-Sicherheitsinfrastruktur. Beide Endgeräte 5, 7 können eine Softwarekomponente betreiben, die während des laufenden Gesprächs das empfangene Sprachsignal analysiert und charakteristische Eigenschaften eines beiden bekannten, zeitlich begrenzten Abschnitts des Telefonsignals berechnet. Diese Softwarekomponente kann das erfindungsgemäße Verfahren gemäß einer Ausführungsform der vorliegenden Erfindung implementieren. Die Softwarekomponenten führen über die sichere Verbindung eine Synchronisation der Uhren durch, um zeitlich identische Signalabschnitte bestimmen zu können. Die genauen zeitlichen Parameter der Signalabschnitte werden deterministisch zufällig variiert, was die Sicherheit des Verfahrens vor Angriffen erhöht. Die Komponente des Kunden kann die charakteristischen Eigenschaften ihres eigenen Sprachsignals berechnen, während die Komponente der Bank die charakteristischen Eigenschaften des von dem Kunden empfangenen Sprachsignals berechnen kann. Die Komponenten können die berechneten Analyseergebnisse über die sichere Verbindung 11 austauschen und vergleichen diese jeweils mit den lokalen Analyseergebnissen.

Insbesondere bei Systemen, welche zentral die Kommunikation mit einer Vielzahl von Kunden ermöglichen, so beispielsweise bei Kunden, die mit einem Kommunikationssystem oder Callcenter einer Bank oder eines anderen Dienstleisters kommunizieren, muss ein Anrufer oder Kunde einem Teilnehmer auf der Seite des Dienstleisters, z.B. einem Callcenter-Agenten, zugeordnet werden. So können Web-Sessions, über die die Authentifizierung beispielsweise mit dem elektronischen Personalausweis über die nPA-Sicherheitsinfrastruktur bei der Bank erfolgt, direkt und einfach zugeordnet werden. Die Zuordnung, welches ankommende Telefongespräch zu den jeweiligen Web-Sessions gehört, kann beispielsweise durch Übertragung eines sicheren Identifikators über den Übertragungskanal 3 und/oder den Sicherheitskanal 11 erfolgen, was beispielsweise mit einem Audio-Wasserzeichen oder durch ein Aufmodulieren auf den Sprachkanal oder Übertragungskanal 3 erreicht werden kann. Das System 1 ermöglicht somit sowohl eine einseitige Authentifikation der jeweils anderen Teilnehmer des Telefoniedienstes als auch eine mehrseitige Authentifikation durch jeden der Teilnehmer 9, 9', so dass jeder Teilnehmer 9, 9' unabhängig von dem anderen und selbstständig entscheiden kann, ob die Telekommunikation nach wie vor vertrauenswürdig ist oder ob ein gewisses Risiko besteht, dass sich durch einen Angriff auf das System 1 die Identität der Kommunikationspartner und/oder die Integrität des Übertragungskanals 3, beispielsweise durch einen Man in the Middle-Angriff, durch Einfügen gezielter Störimpulsen oder durch weitere Angriffe geändert haben könnte.

Das erfindungsgemäße Kommunikationssystem 1 ermöglicht somit eine deutliche Erhöhung der Sicherheit eines Telefoniedienstes und insbesondere eine Überprüfung der Integrität und Authentizität eines Kommunikationskanals, beispielsweise des Übertragungskanals 3, wobei die erfindungsgemäße Authentifikation der Teilnehmer 9, 9' auf jedes beliebige bestehende Kommunikationssystem, beispielsweise ein analoges, digitales oder ein paketbasiertes Kommunikationssystem aufsetzen kann und somit keine Änderungen in diesem zugrunde liegenden Kommunikationssystem erforderlich sind. Vielmehr kann die erfindungsgemäße Authentifikation einfach in jedes Endgerät 5, 7 durch geeignete Software-Module integriert werden, beispielsweise als Apps oder andere Programme, so dass sowohl das Abtasten der Sprachsignale als auch der Vergleich der Prüfdatensätze durch die Rechen-Ressourcen des Endgeräts 5, 7 ausgeführt werden kann. Es ist jedoch auch klar, dass alternativ oder zusätzlich Hardware-Module oder Hardware-Komponenten beispielsweise an der Gegenstelle 7 vorgesehen sein können, um eine effizientere Abtastung und Verarbeitung der Sprachsignale zu ermöglichen.

Ferner ist das System 1 nicht lediglich auf zwei Teilnehmer 9, 9' beschränkt. Das System 1 kann vielmehr beliebige weitere Teilnehmer über den Übertragungskanal 3 miteinander verbinden, beispielsweise in Form einer Telefonkonferenz. Hierbei können sowohl der Übertragungskanal 3 als auch der Sicherheitskanal 11 von der Gegenstelle 7 zu jedem Endgerät der weiteren Teilnehmer sternförmig aufgebaut sein. Die vorliegende Erfindung ist jedoch nicht auf eine bestimmte Topologie der Kanäle 3, 11 beschränkt und kann auch weitere, beispielsweise ringförmige Topologien umfassen, oder ein oder mehrere allgemeine Netzwerke sowohl zur Daten- als auch zur Sprachübertragung nutzen, um die Teilnehmer miteinander zu verbinden. In einer Konfiguration mit einer Vielzahl von Teilnehmern kann von jedem Endgerät aus der jeweilige Prüfdatensatz über den Sicherheitskanal 11 an alle weiteren Teilnehmer gesendet und dort mit dem lokalen Prüfdatensatz verglichen werden. Alternativ kann auch lediglich nur der Prüfdatensatz des Teilnehmers 9' von der Gegenstelle 7 an alle weiteren Teilnehmer versendet werden oder es kann lediglich vorgesehen sein, dass nur eine Teilmenge der Teilnehmer ihre entsprechenden Prüfdatensätze über den Sicherheitskanal 11 austauschen, um so ihre Authentizität gegenüber den Kommunikationspartnern nachzuweisen.

Die vorliegende Erfindung ist bei einer Vielzahl von Kommunikationssystemen und Übertragungsverfahren einsetzbar, beispielsweise bei analoger Telefonie, ISDN, ADSL, VDSL aber auch drahtlosen Verfahren, wie GSM, GSM mit HSCSD oder GPRS, EDGE oder HSDPA. Ferner kann die vorliegende Erfindung sowohl in einem Smartphone oder einer anderen geeigneten mobilen Vorrichtung, beispielsweise einem Tablet-PC oder einem Pad, integriert sein, oder sie kann ein klassisches Endgerät, beispielsweise ein Telefon, und einer Verarbeitungseinheit, wie zum Beispiel einen Desktop-PC oder einen Laptop, umfassen. Die Kommunikationsverbindung zwischen den beiden Verarbeitungseinheiten kann eine Ethernet-Verbindung oder eine sonstige gesicherte paketausgerichtete Verbindung sein. Die Verarbeitungssysteme können jedoch ebenfalls das die Endgeräte verbindende Netzwerk verwenden, um den Sicherheitskanal aufzubauen. Somit ist die vorliegende Erfindung insbesondere nicht durch ein bestimmtes Endgerät 5, 7 oder eine bestimmte Kommunikationsinfrastruktur beschränkt.

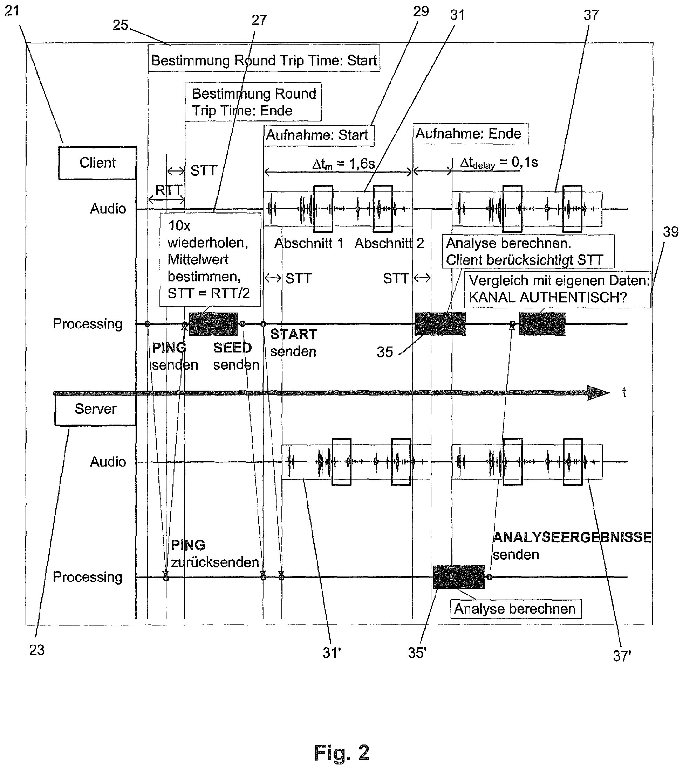

Figur 2 zeigt ein Zeitablaufdiagramm, das den Ablauf eines Verfahrens gemäß einer Ausführungsform der vorliegenden Erfindung mit zwei Teilnehmern zeigt. Dargestellt ist ein Client 21 und ein Server 23, welche beispielsweise dem Endgerät 5 und der Gegenstelle 7 aus Figur 1 entsprechen können. Beim Start findet eine Synchronisation des Clients 21 und des Servers 23 statt, indem die Uhren sowohl des Clients 21 als auch des Servers 23 beispielsweise mittels des Network Time Protokolls (NTP) miteinander synchronisiert werden. Im Folgenden wird die Übertragungsverzögerung des Übertragungskanals zwischen Client 21 und Server 23 durch Bestimmung 25 der Round Trip Time (RTT) ermittelt, indem von dem Client 21 aus eine Nachricht, beispielsweise ein Ping, an den Server 23 und von diesem zurück zum Client 21 gesendet wird. Hieraus ergibt sich unmittelbar nach $RTT = 2 \cdot STT$ die Single Trip Time (STT), welche einen Wert für die Übertragungsverzögerung zwischen Client 21 und Server 23 angibt. Da diese Bestimmung 25 jedoch je nach Auslastung des Übertragungskanals Schwankungen unterliegen kann, kann die Bestimmung 25 mehrfach wiederholt werden 27, so dass eine durchschnittliche Übertragungsverzögerung genauer abgeschätzt werden kann. Durch die Bestimmung des Verzögerungswerts STT kann sichergestellt werden, dass das Sprachsignal, das am Client 21 abgetastet wird, zu einem im Wesentlichen gleichen Zeitpunkt auch am Server 23 abgetastet wird. Es können ferner Verfahren oder Komponenten vorgesehen sein, welche Fehler kompensieren, die durch eine mangelhafte zeitliche Synchronisation der Teilnehmer und somit des Clients 21 und des Servers 23 entstehen können.

Nach Schritt 25, 27 wird von dem Client 21 ein Seed-Wert zur Initialisierung eines Pseudozufallszahlengenerators gesendet, der sowohl am Client 21 als auch am Server 23 vorhanden ist. Im Anschluss daran, bestimmt der Client 21 einen Startzeitpunkt $t_0$ für die Aufnahme des Sprachsignals und sendet diesen Wert an den Server 23. Es ist jedoch klar, dass auch der Server 23 den Startzeitpunkt $t_0$ festlegen kann und entsprechend an den Client 21 kommunizieren kann.

Der Client 21 fängt zum Zeitpunkt $t_0$ mit der Abtastung des Sprachsignals an 29. Hierbei tastet der Client 21 zunächst einen Sprachsignalabschnitt 31 ab, der beispielsweise eine Länge von $\Delta t_m = 1{,}6s$ haben kann. Am Server 23 wird das dort vorliegende Sprachsignal 31' ebenfalls abgetastet, jedoch um den ermittelten Verzögerungswert STT verzögert. Auch hier kann der Sprachsignalabschnitt 31' die gleiche Länge von $\Delta t_m$ = 1,6s aufweisen. Sowohl am Client 21 als auch am Server 23 wird der jeweils abgetastete Sprachsignalabschnitt 31, 33 in einen Satz von Fenstern unterteilt, von denen in Figur 2 lediglich zwei gezeigt sind. Sowohl der Client 21 als auch der Server 23 bestimmen durch den lokalen Pseudozufallszahlengenerator einen Satz von Pseudozufallszahlen, die dazu verwendet werden, diejenigen Fenster der Sprachsignalabschnitte 31, 31' zu identifizieren, welche zur weiteren Analyse und Verarbeitung herangezogen werden. Wie bereits erläutert worden ist, sind diese Pseudozufallszahlen beim Client 21 und Server 23 stets gleich, da die Pseudozufallszahlengeneratoren mit dem gleichen Seed-Wert initialisiert worden sind. Aus den deterministisch zufällig bestimmten Fenstern werden auf jeder Seite Merkmale extrahiert und zur Erzeugung von Prüfdatensätzen 35 bzw. 35' verwendet. Nebenläufig zu der Analyse der Merkmale und zur Erzeugung der Prüfdatensätze 35, 35' kann sowohl der Client 21 als auch der Server 23 damit fortfahren, weitere Sprachsignalabschnitte 37, 37', beispielsweise mit einer Verzögerung von $\Delta t_{delay}$ = 0,1s abzutasten, wodurch eine kontinuierliche Überprüfung der Authentizität des Übertragungskanals und der Teilnehmer gewährleistet werden kann.

In der in Figur 2 gezeigten Ausführungsform sendet der Server 23 den Prüfdatensatz 35' an den Client 21, so dass der Client 21 durch einen Vergleich 39 der Prüfdatensätze 35, 35' feststellen kann, ob der Server 23 und somit zumindest teilweise der Übertragungskanal authentisch ist oder ob ein potentielles Sicherheitsrisiko vorliegt.

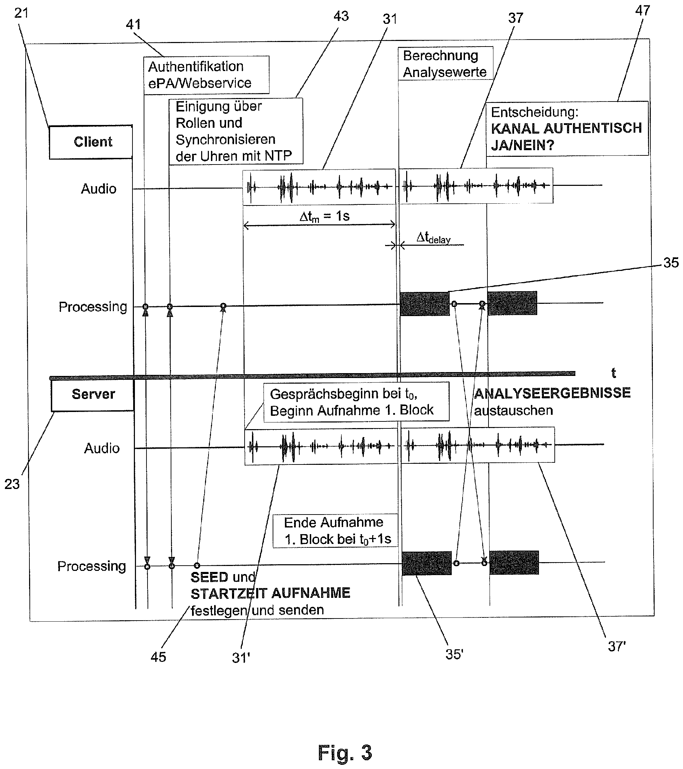

Figur 3 zeigt ein Zeitablaufdiagramm einer Authentifikation gemäß einer weiteren Ausführungsform der vorliegenden Erfindung, wobei das gezeigte Verfahren eine beidseitige Prüfung der Authentizität der beteiligten Teilnehmer ermöglicht. Das Verfahren kann ebenfalls von den in Fig. 2 dargestellten Komponenten durchgeführt werden, so dass übereinstimmende Komponenten mit denselben Bezugszeichen gekennzeichnet sind. Figur 3 zeigt ähnlich zu Figur 2 einen Client 21 und einen Server 23, die über einen Übertragungskanal miteinander kommunizieren und einen Sicherheitskanal verwenden, um die Authentizität des Gesprächspartners zu überprüfen. In der Ausführungsform nach Figur 3 erfolgt zuerst eine Authentifikation und Identitätsprüfung 41 durch eine Sicherheitsinfrastruktur. Nachfolgend werden zwischen dem Client 21 und dem Server 23 die jeweiligen Rollen ausgehandelt und die Uhren werden beispielsweise mittels NTP miteinander synchronisiert 43. In der hier gezeigten Ausführungsform und basierend auf der Verteilung der Rollen sendet der Server 23 einen Seed-Wert zur Initialisierung der beidseitigen Pseudozufallszahlengeneratoren und legt eine Startzeit für die Abtastung der Sprachsignale fest 45. Abhängig von der Startzeit tasten sowohl Client 21 als auch Server 23 die jeweiligen Sprachsignale in Sprachsignalabschnitten 31, 37 auf der Client-Seite bzw. 31', 37' auf der Server-Seite kontinuierlich und synchronisiert ab. Auf der Grundlage des Sprachsignalabschnitts 31 erzeugt der Client 21 einen Prüfdatensatz 35 und der Server 23 entsprechend aus dem Sprachsignalabschnitt 31' den Prüfdatensatz 35'. Abweichend zu der in Figur 2 gezeigten Ausführungsform sendet jedoch sowohl der Client 21 als auch der Server 23 den jeweils lokalen Prüfdatensatz 35, 35' über den Sicherheitskanal zur jeweiligen Gegenseite, so dass auf jeder Seite durch einen Vergleich 47 der Prüfdatensätze 35, 35' unabhängig voneinander festgestellt werden kann, ob die Integrität des Übertragungskanals gewahrt und die Authentizität des jeweiligen Kommunikationspartners gleichbleibend ist.

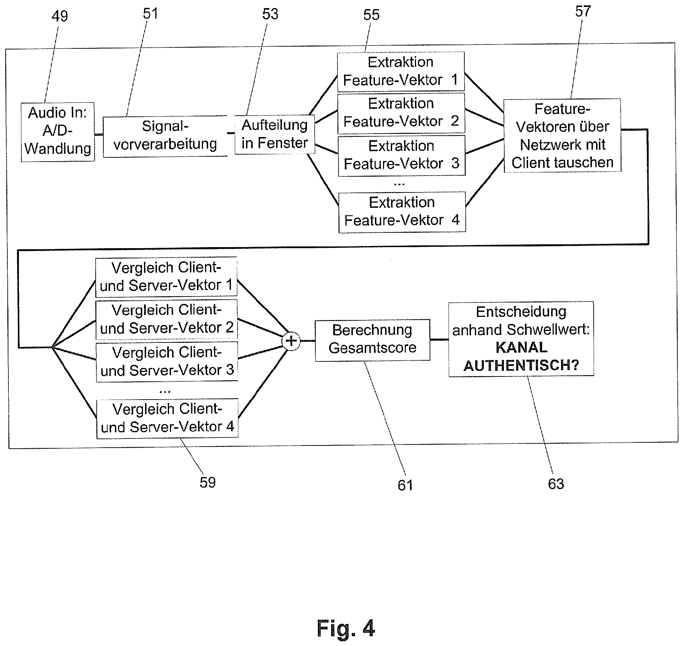

Figur 4 zeigt ein Flussdiagramm einer Signalverarbeitung gemäß einer Ausführungsform der vorliegenden Erfindung, wie sie auf einem Endgerät, beispielsweise dem in den Figuren 2 und 3 gezeigten Server 23 ausgeführt werden kann. Hierbei stellen die einzelnen Blöcke funktionale Komponenten dar, die von einer Abtastung bis zur Klassifikationsentscheidung durchlaufen werden können. Das Verfahren beginnt mit einem Abtasten 49 eines Sprachsignalabschnitts der lokalen Sprachsignale. Das abgetastete Signal wird geeignet vorverarbeitet 51, beispielsweise indem es normalisiert und geeignet gefiltert wird. Der vorverarbeitete Sprachsignalabschnitt kann dann im Schritt 53 in einen Satz von Fenstern unterteilt werden, welche vorzugsweise den gesamten Sprachsignalabschnitt abdecken können. Die einzelnen Fenster können eine Länge von $\Delta t_F$ haben und können in Abhängigkeit von einem Überlappungsfaktor $O_F$ mit $0 < O_F < 1$ direkt aneinander grenzen ($O_F$ = 0) oder sich zu einem gewissen Grad, beispielsweise um die Hälfte ($O_F$ = 0,5) überlappen.

Jedes Fenster kann weiter vorverarbeitet werden, beispielsweise durch die Anwendung eines Hamming-Filters. Ausgehend von diesen Daten wird nun eine Vielzahl von Merkmalen extrahiert 55, welche in einem Prüfdatensatz lokal gespeichert und über einen Sicherheitskanal an die anderen Teilnehmer gesendet werden 57, wobei auch Prüfdatensätze der anderen Teilnehmer in Schritt 57 empfangen werden. Wie in Fig. 4 gezeigt, können die Prüfdatensätze als Merkmalsvektoren ausgetauscht werden, wobei ein Prüfdatensatz für jedes Fenster jeweils einen oder mehrere Merkmalsvektoren umfassen kann.

Das vorverarbeitete Signal aus jedem Fenster kann durch eine Fourier-Transformation oder Fast Fourier-Transformation (FFT) in den Frequenzraum transformiert werden. Aus den Fourier-Koeffizienten und dem ursprünglichen Zeitsignal können weitere Merkmale und Merkmalsvektoren berechnet werden, beispielsweise analytische und statistische Merkmale, wie Compactness, Spectral Flux, Spektrale Variabilität, Mel-Frequency Cepstrum Koeffizienten, Momente einer statistischen Verteilung und weitere.

Der Extraktionsalgorithmus zur Berechnung von Compactness kann beispielsweise ein Maß für den Rauschanteil eines Signalabschnitts berechnen. So kann ausgehend von einem vorher durch eine FFT berechneten Betragsspektrum $|X(k)| = \{k_0, k_1, ..., k_N\}$ der Grad der Compactness eines gegebenen Signalabschnitts bestimmt werden. $N$ ist dabei die Anzahl der Frequenzen. $k_i$ ist der Betrag bei Frequenz $f_i$ mit $k_i \in R$. Hierbei kann eine Schleife mit Laufindex $i$ und $0 \leq i \leq N$ über $|X(k)|$ laufen. Bei Werten von $i$, bei denen der Betrag aller drei benachbarten Leistungen $k_{i-1}$, $k_i$, $k_{i+1}$ größer als 0 ist, kann die Compactness $C$ des gesamten Signalabschnitts beispielsweise berechnet werden als:

$$C = \sum_0^N \left| \frac{20 \cdot \log k_i - 20 \cdot \left( \log k_{i-1} + \log k_i + \log k_{i+1} \right)}{3} \right| .$$

Spectral Flux kann ein Maß für die spektrale Veränderung eines Signals sein. Dazu können die Quadrate der Differenzen der Betragsspektren zweier aufeinander folgender Fenster aufsummiert werden. Das Betragsspektrum $|X(k)|$ kann dabei das Spektrum des aktuell betrachteten Fensters und das Betragsspektrum $|X'(k)|$ das Spektrum des vorhergehenden Fensters sein. In beiden Fällen kann $N$ die Anzahl der Frequenzen im Betragsspektrum angeben. Der Spectral Flux $F_X$ des Algorithmus kann dann wie folgt berechnet werden:

$$F_X = \sum_1^N \left( k_i - k'_i \right)^2 .$$

Darüber hinaus kann die Spektrale Variabilität $V_X$ eines Signalabschnitts, welche eine statistische Standardabweichung $\sigma$ des Betragsspektrums $|X(k)|$ darstellen kann, wie folgt berechnet werden:

$$V_X = \sigma\left( |X(k)| \right) = \sqrt{ \frac{1}{N} \cdot \sum_{i=0}^N \left( k_i - \overline{X} \right)^2 } \text{ , wobei } \overline{X} = \frac{1}{N} \cdot \sum_{i=0}^n k_i .$$

Zur Berechnung weiterer Merkmale kann der Algorithmus Method of Moments oder Momentenmethode verwendet werden, der mit Mitteln der Statistik Features aus gegebenen Signalabschnitten extrahieren kann. Dabei wird ebenfalls das Betragsspektrum $|X(k)|$ eines Signalabschnitts betrachtet. Hierbei werden die Momente einer statistischen Verteilung berechnet, die für diese charakteristisch sind. Hierzu kann beispielsweise zunächst die Summe $S_X$ des Betragsspektrums $|X(k)|$ gebildet werden, was als Fläche unter einer Kurve, die als das Betragsspektrums interpretiert werden kann, aufgefasst werden kann, wobei $S_X = \sum_1^N k_i$ ist. Im Folgenden können alle Werte in $|X(k)|$ mit $S_X$ zu $|X(k)_{Norm}|$ normiert werden, so dass anschließend $M_{m,temp}$ berechnet werden kann als:

$$M_{m,temp(i)} = \sum_1^N i \cdot k_{Norm(i)} .$$

Schließlich kann ein Ausgabewert $M_m$ mit $M_m = \{M_1, M_2, ..., M_5 | M_{mi} \in R\}$ bestimmt werden, wobei:

$$M_1 = S_X ,$$

$$M_2 = M_{m,temp(2)} ,$$

$$M_3 = M_{m,temp(3)} - M_{m,temp(2)}^2 ,$$

$$M_4 = 2 \cdot M_{m,temp(2)}^3 - 3 \cdot \left( M_{m,temp(2)} \cdot M_{m,temp(3)} \cdot M_{m,temp(4)} \right)$$

und

$$M_5 = -3 \cdot M_{m,temp(2)}^{\ 4} + 3 \cdot \left( M_{m,temp(2)} \cdot M_{m,temp(2)} \cdot M_{m,temp(3)} \right)$$
$$- 4 \cdot \left( M_{m,temp(2)} \cdot M_{m,temp(4)} \cdot M_{m,temp(5)} \right).$$

Es ist jedoch klar, dass die vorliegende Erfindung nicht auf die beschriebenen Merkmalsextraktionsverfahren beschränkt ist und vielmehr jedes geeignete Merkmal extrahiert und verwendet werden kann, das zur Charakterisierung von Sprach- und Audiosignalen herangezogen werden kann, um so eine Aussage über den Sprachinformationsgehalt und Eigenschaften zu erhalten.

Ferner können einzelne Filter zur Merkmalsextraktion auf einer Filter-Bank angeordnet sein und das Eingabesignal verarbeiten. Bei der Berechnung der einzelnen Merkmale können deterministisch zufällige Werte für einzelne Parameter der Merkmalsextraktionsverfahren verwendet werden, welche ausgehend von einem initial zwischen den Teilnehmern ausgetauschten Seed-Wert berechnet werden können. Da die Anzahl der Parameter zur Berechnung der jeweiligen Sprachmerkmale vorab bekannt und an jedem Endgerät gleich ist, werden durch die Bestimmung der Pseudozufallszahlen immer gleiche, jedoch (pseudo-)zufällige Werte für die Parametrierung bestimmt.

Nach dem Austausch der Merkmalsvektoren in Schritt 57 vergleicht der Server 23 die von dem Client 21 empfangenen Merkmalsvektoren im Schritt 59. Obwohl Schritt 59 lediglich für den Vergleich von Merkmalsvektoren von zwei Teilnehmern dargestellt ist, ist die vorliegende Erfindung nicht nur auf zwei Teilnehmer beschränkt. Vielmehr kann der Server 23 sequentiell oder nebenläufig die Merkmalsvektoren von mehreren Teilnehmern mit den eigenen Merkmalsvektoren vergleichen und aus dem Ergebnis eine Aussage über die Authentizität des jeweiligen Teilnehmers treffen.

Aus den Ergebnissen des Vergleichs 59 kann der Server 23 ein Gesamtergebnis berechnen 61 und ausgehend von diesem Ergebnis entweder durch einen einfachen Schwellwertvergleich oder durch Verwendung von Klassifikatoren oder durch weitere geeignete Verfahren eine Entscheidung über die Integrität des Übertragungskanals der Kommunikation und der Authentizität der weiteren Teilnehmer treffen 63.

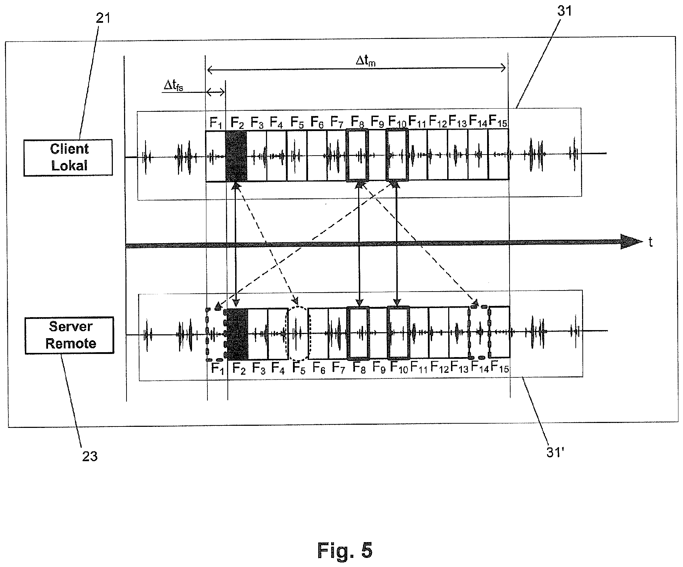

Figur 5 zeigt einen Ausschnitt aus dem Zeitablaufdiagramm aus Figur 3, der die Aufteilung eines abgetasteten Sprachsignalabschnitts 31, 31' in einzelne Fenster $F_1,...,F_{15}$ zeigt. Ferner verdeutlicht Figur 5 einen Vergleich der einzelnen Fenster gemäß einer Ausführungsform der vorliegenden Erfindung. Um Angriffe auf das erfindungsgemäße Verfahren zu erschweren werden die Zeitindizes der zu betrachtenden Fenster in den jeweiligen Sprachsignalabschnitten 31, 31' deterministisch zufällig bestimmt. Nach der Abtastung der Sprachsignalabschnitte 31, 31' und der Aufteilung in die einzelnen Fenster $F_1,...,F_{15}$ können deterministisch zufällig Zeitindizes der zu analysierenden Fenster bestimmt werden. Für jedes Zeitintervall werden auch hierzu von einem Pseudozufallszahlengenerator anhand eines initial verteilten Seed-Werts an jedem Endgerät neue Pseudozufallszahlen berechnet.

Einerseits können Fenster einer ersten Gruppe untersucht werden, die sich zeitlich entsprechen, beispielsweise die Fenster $F_2$, $F_8$ und $F_{10}$ der Signalabschnitte 31 und 31'. Diese weisen bei beiden Teilnehmern den gleichen Zeitindex auf und ihre Merkmalsvektoren haben aufgrund der Parametrierung die gleiche Länge. Aufgrund der zeitlichen Übereinstimmung dieser Fenster sollte ein Vergleich eine hohe Identität ergeben. Hieraus ergibt sich unmittelbar ein Kriterium für die Authentizität des anderen Teilnehmers. Andererseits werden vorzugsweise auch Fenster verglichen, die sich zeitlich nicht entsprechen. Diese Fenster unterscheiden sich im Zeitindex, haben aber ansonsten die gleichen Parameter wie die auf Identität zu prüfenden Fenster der ersten Gruppe. Beispielsweise werden in der zweiten Gruppe die Fenster $F_1$ und $F_{10}$, $F_2$ und $F_5$, sowie $F_8$ und $F_{14}$ miteinander verglichen. Bei einer nicht gestörten Übertragung sollten diese Signalabschnitte zuverlässig als nicht identisch erkannt werden.

Der Vergleich von nicht identischen Fenstern kann die Zuordnungsqualität und damit die Systemsicherheit wesentlich erhöhen. Somit kann insbesondere eine erhöhte Fehlertoleranz gegenüber einer kontinuierlichen Signaleinsteuerung erreicht werden. Die Vergleiche von sowohl sich entsprechenden als auch verschiedenen Fenstern auf Identität bzw. Nichtidentität fließen vorzugsweise in das Gesamtergebnis ein, das zur Beurteilung der Integrität des Kommunikationskanals und der Authentizität der Teilnehmer herangezogen wird. Beispielsweise kann lediglich bei einer Identität der zueinander synchronen Zeitfenster und einer Nichtidentität der unterschiedlichen Zeitfenster angenommen werden, dass der Übertragungskanal authentisch ist. In allen anderen Fällen kann angenommen werden, dass die Integrität des Übertragungskanals gestört ist und somit nicht mehr von einer sicheren Kommunikation ausgegangen werden kann. Ferner können die Ergebnisse der Vergleiche auf Identität und Nichtidentität unterschiedlich gewichtet werden. Beispielsweise kann das Ergebnis des Vergleichs auf Identität einen höheren Gewichtungsfaktor erhalten, da die Identität von zeitlich gleichen Fenstern ein stärkeres oder wichtigeres Kriterium für die Authentizität des Kanals sein kann. Die Nichtidentität der zeitlich verschiedenen Fenster kann hingegen für die Fehlerprüfung wichtig sein, ansonsten aber eher nachgeordnet sein.

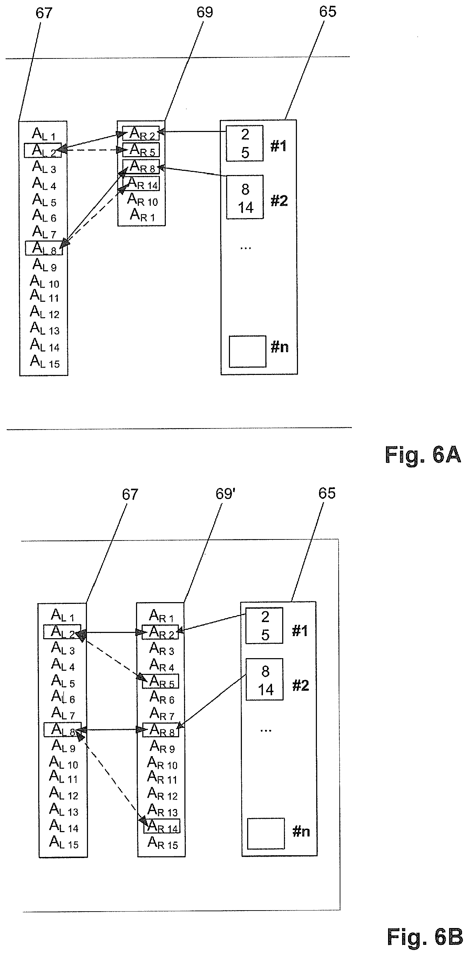

Durch die deterministisch zufällige Festlegung der zu vergleichenden Fenster $F_i$ in jedem Sprachsignalabschnitt 31, 31' können gemäß Ausführungsformen der vorliegenden Erfindung unterschiedliche Prüfdatensätze zur Übertragung verwendet werden, wie sie in den Figuren 6A und 6B gezeigt sind. So können beispielsweise nur die ausgewählten Fenster in den zu übertragenden Prüfdatensatz eingefügt und über den Sicherheitskanal an die weiteren Teilnehmer übertragen werden. Hierzu kann, wie in Fig. 6A und 6B gezeigt, ein Indexvektor 65 erzeugt werden, der mehrere Tupel $(i, j)_k$ von Indizes umfasst. Der erste Eintrag $i$ des $k$-ten Tupels $(i, j)_k$ gibt jeweils den Index eines Fensters $F_i$ an, das auf Identität überprüft werden soll, und der zweite Eintrag $j$ indiziert ein weiteres Fenster $F_j$, das mit dem ersten Fenster $F_i$ auf Nichtidentität überprüft werden soll. Beispielsweise definiert ein Tupel (2, 5) einen Vergleich der Fenster $F_2$ auf Identität und einen Vergleich des lokalen Fensters $F_2$ mit dem entfernten Fenster $F_5$ auf Nichtidentität.

Die lokalen Daten $A_L$ 67 können hierbei stets über ihren Index angesprochen werden, da sie jeweils in ihrer Gesamtheit vorliegen können. Die entfernten Merkmalsdaten und Analyseergebnisse $A_R$ 69, 69' können sich jedoch in den in Fig. 6A bzw. 6B dargestellten Ausführungsformen unterscheiden. Liegen wie in Fig. 6B gezeigt, auch hier alle Merkmalsdaten 69' vor, so erfolgt auch hier eine Adressierung über den Index. Falls jedoch, wie in Fig. 6A gezeigt, nur eine Auswahl der entfernten Merkmalsdaten 69 übertragen wurde, können die Merkmalsdaten über die Indices $k$ der Tupel $(i, j)_k$ im Indexvektor 65 angesprochen werden. Hierbei gilt, dass für den Identitätsvergleich der Fenster $F_i$ die entfernten Merkmalsdaten mit dem Index $2 \cdot k$ und für den Vergleich auf Nichtidentität mit dem Fenster $F_j$ jeweils die entfernten Merkmalsdaten mit dem Index $2 \cdot k + 1$ aus dem Merkmalsvektor 69 ausgewählt werden können.

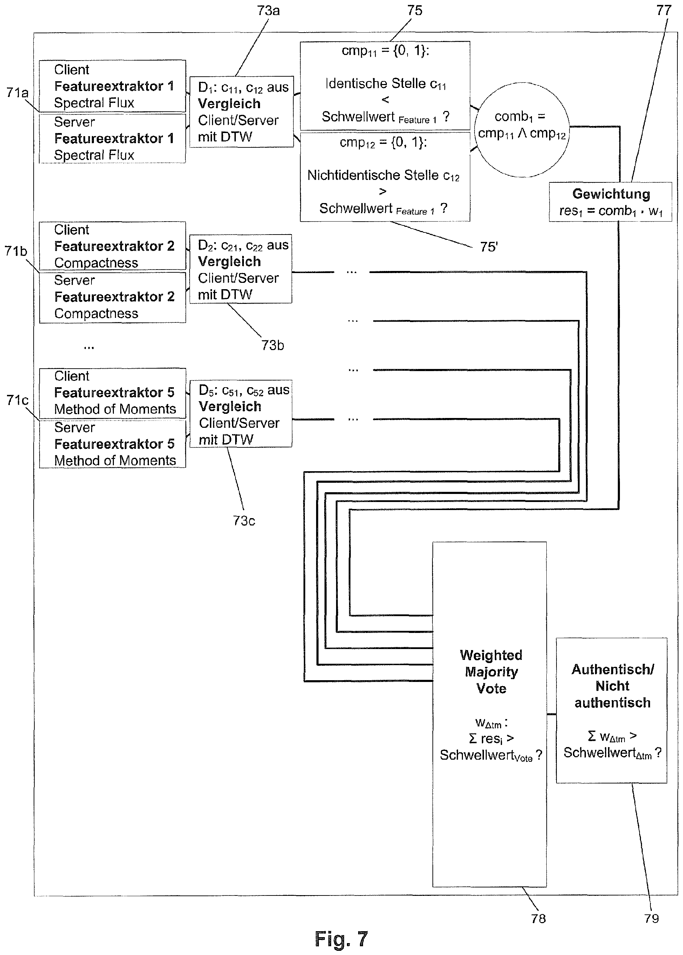

Figur 7 zeigt ein Flussdiagramm zum Vergleich des empfangenen Prüfdatensatzes mit dem lokalen Prüfdatensatz gemäß einer Ausführungsform der vorliegenden Erfindung, wie er beispielsweise in den Schritten 39 aus Figur 2, 47 aus Figur 3 und 59 bis 63 aus Figur 4 dargestellt ist. Wie bereits ausgeführt worden ist, können für jedes Fenster unterschiedliche Merkmale berechnet werden und in den Prüfdatensatz eingefügt werden. Diese Vielzahl von Merkmalen kann beim Vergleich des lokalen Prüfdatensatzes mit dem empfangenen Prüfdatensatz jeweils einzeln verglichen werden. In Figur 7 ist beispielhaft der Vergleich der Merkmale Spectral Flux 71a, Compactness 71b und von statistischen Momenten 71c dargestellt. Es ist jedoch klar, dass auch andere und weitere Merkmale verglichen werden können, die in den Prüfdatensätzen enthalten sind. Die Datensätze werden beispielsweise durch ein Dynamic Time Warping (DTW)-Verfahren miteinander verglichen 73a, 73b, 73c.

Der Vergleich kann beispielsweise als eine parallele Architektur realisiert sein. Die Eingabewerte 71a, 71b, 71c werden jeweils Merkmalsextraktoren $D_i$ zugeführt, die zwei Ergebnisse der Prüfung auf Identität und Nichtidentität ergeben. So werden bei dem Vergleich 73a, 73b, 73c jeweils zwei Vergleichswerte $c_{i1}$, $c_{i2}$ erzeugt, welche anschließend im Schritt 75, 75' mit einem Schwellwert verglichen werden. Als Ergebnis werden die Variablen $cmp_{i1}$ und $cmp_{i2}$ berechnet, die jeweils anzeigen, ob $c_{i1}$ unter dem Schwellwert bzw. $c_{i2}$ über dem jeweiligen Schwellwert liegt. So enthält die Variable $cmp_{i1}$ den Wert 1, wenn $c_{i1}$ unter dem Schwellwert liegt und damit die Prüfung der identischen Signalabschnitte erfolgreich war. Entsprechend enthält $cmp_{i2}$ den Wert für die Nichtidentitätsprüfung, wobei $c_{i2}$ über dem Schwellwert liegen muss, damit die Prüfung der nicht identischen Signalabschnitte erfolgreich ist.

In den nachfolgenden Schritten werden die Ergebnisvariablen $cmp_{i1}$ und $cmp_{i2}$ zu einem Wert $comb_i$ verknüpft. Die Verknüpfung der Ergebnisvariablen $cmp_{i1}$ und $cmp_{i2}$ kann beispielsweise durch eine logische UND-Verknüpfung erfolgen. Vorzugsweise können jedoch die Ergebnisvariablen $cmp_{i1}$ und $cmp_{i2}$ der Identitätsprüfung bzw. Nichtidentitätsprüfung gewichtet und erst dann miteinander verknüpft werden, beispielsweise als eine normalisierte Summe. Der erhaltene Wert $comb_i$ kann dann ebenfalls mit einem Gewicht $g_i$ gewichtet werden, so dass für ein bestimmtes Merkmal in Schritt 77 das Ergebnis $res_i = comb_i * b_i$ erhalten wird. Die so berechneten Ergebnisse aller Klassifikatoren $D_i$ 73a, 73b, 73c werden in Schritt 78 summiert und es wird geprüft, ob eine Erfolgsbedingung des Weighted Majority Vote $w_{\Delta tm}$ mit $\sum res_i > Schwellwert_{Vote}$ erfüllt ist. Die letzte Komponente 79 sammelt alle Weighted Majority Vote-Entscheidungen für das Analyseintervall $\Delta_{tm}$. Wenn die Anzahl aller Entscheidungen $\sum w_{\Delta tm}$ einen Schwellwert überschreitet, wird der Übertragungskanal als authentisch klassifiziert. Die Festlegung dieses Schwellwerts und damit die Feststellung, wie viele Fehlentscheidungen pro Analyseintervall $\Delta t_m$ als akzeptabel für den Nachweis der Authentizität einer Verbindung gelten, hängt vorzugsweise von einem Verhältnis zwischen Robustheit und potentieller Sicherheit des Verfahrens ab.

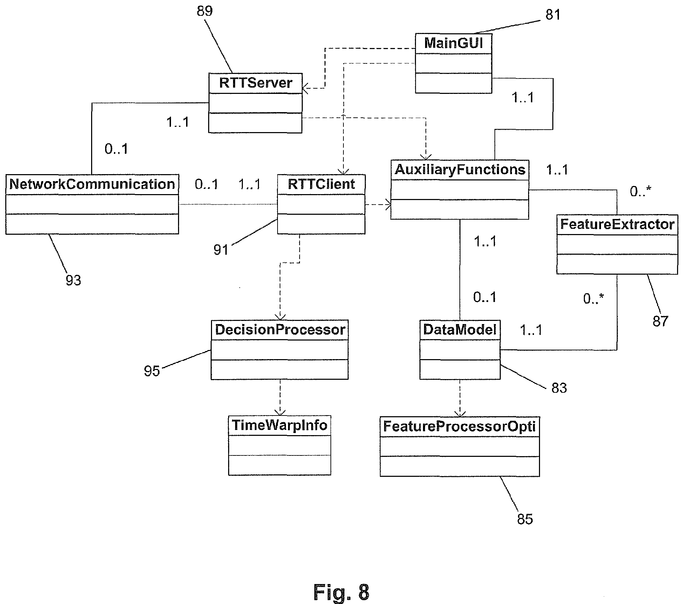

Figur 8 stellt ein Klassendiagramm dar, welches Komponenten des erfindungsgemäßen Systems gemäß einer Ausführungsform der vorliegenden Erfindung software-technisch umsetzt.

Bei Systemstart wird eine Instanz der Klasse MainGUI 81 erzeugt und das entsprechende Objekt wird aufgerufen. Die Funktionalität dieses Objekts besteht im Wesentlichen aus zwei Gruppen, dem Zugriff auf Extraktionsalgorithmen und einem Mustervergleich. Zur Merkmalsextraktion wird ein Objekt der Klasse DataModel 83 verwendet, in dem die Extraktionsparameter festgelegt sind. Dieses setzt dann eine Instanz der FeatureProcessorOpti-Klasse 85 ein, das den Extraktionsvorgang steuert und sämtliche dafür notwendige Funktionalität zur Verfügung stellt, die nicht in den Extraktionsalgorithmen enthalten ist. Die Extraktionsalgorithmen werden schließlich polymorph über FeatureProcessorOpti 85 aufgerufen, wobei der Prototyp für alle Extraktionsalgorithmen durch FeatureExtractor 87 definiert ist.

Das MainGUI-Objekt kann weiterhin auch die Komponenten instanziieren, die die eigentliche Kernfunktionalität des Systems steuern: Die Klassen für die einzelnen Teilnehmer der Kommunikation gemäß ihren Rollen als Client oder Server durch die Klassen RTTServer 89 und RTTClient 91. Beide verwenden zur Kommunikation über das Netzwerk die Klasse NetworkCommunicator 93. RTTClient instanziiert schließlich ein DecisionProcessor-Objekt 95. Dieses kapselt alle Funktionen, die mit dem Vergleich der gewonnenen Merkmalsdaten zusammenhängen. Diese bestehen wiederum aus zwei Gruppen: Einerseits dem Zugriff auf einen Klassifikator, beispielsweise FastDTW, und andererseits weitere Dynamic Time Warping-Algorithmen zum Musterverlgeich. Da FastDTW keine eindeutige Oberklasse bzw. keine einheitliche Schnittstelle enthalten muss, ist TimeWarpInfo insofern nur stellvertretend dargestellt. Andererseits beinhaltet das DecisionProcessor-Objekt die Funktionalität zur Bewertung der durch FastDTW berechneten Ergebnisse zur Entscheidung über die Authentizität der Teilnehmer.

Das in Figur 8 dargestellte Klassendiagramm entspricht einer Darstellung für eine objektorientierte Programmiersprache und umfasst Komponenten, welche insbesondere für die Programmiersprache Java charakteristisch sind. Es ist jedoch klar, dass die vorliegende Erfindung auch durch andere objektorientierte Programmiersprachen, beispielsweise Smalltalk, C++, C#, Pascal und weitere, entsprechend implementiert werden kann und hierbei nicht auf die in Figur 8 dargestellten Klassen beschränkt ist. Vielmehr kann eine konkrete Implementierung andere und zusätzliche Klassen enthalten. Eine Implementierung durch weitere Programmierparadigmen, beispielsweise durch eine funktionale Programmiersprache oder eine logische Programmiersprache sind ebenfalls entsprechend möglich.

Die vorliegende Erfindung kann als Quellcode oder als ein ausführbares Programm oder als eine Komponente eines ausführbaren Programms auf das jeweilige Endgerät heruntergeladen oder lokal von einem Datenträger ausgelesen werden und entsprechend kompiliert und installiert werden. Die jeweils installierte Komponente baut zuerst eine Verbindung, beispielsweise durch das instanziierte NetworkCommunication-Objekt 93, zu den weiteren Komponenten auf, wobei die einzelnen Rollen, beispielsweise durch die MainGUI-Objekte 81 ausgehandelt werden können, und im Folgenden dann die Verarbeitung entweder an die Instanz der Klasse RTTServer 89 oder RTTClient 91 übergeben werden kann. Andere Realisierungen der Software-technischen Umsetzung der Ausführungsform der vorliegenden Erfindung sind jedoch denkbar und die vorliegende Erfindung ist nicht auf eine Übertragung und Ausführung auf einer bestimmten Verarbeitungskomponente beschränkt. Vielmehr können die einzelnen durch das Klassendiagramm veranschaulichten Komponenten und Verarbeitungsschritte als einzelne Software- oder Hardware-Komponenten oder Software-Hardware-Kombinationen realisiert sein. Insbesondere können beispielsweise Algorithmen auch ausschließlich in Hardware abgebildet sein.

Die in der vorstehenden Beschreibung, den Ansprüchen und den Figuren offenbarten Merkmale können sowohl einzeln als auch in beliebiger Kombination für die Verwirklichung der Erfindung in ihren verschiedenen Ausführungen von Bedeutung sein.

Bezugszeichenliste

| | |
|---|---|
| 1 | System |
| 3 | Übertragungskanal |
| 5 | Endgerät |
| 7 | Gegenstelle |
| 9,9' | Teilnehmer |
| 11 | Sicherheitskanal |
| 13 | Kommunikationskanal |
| 15 | Lesegerät |
| 17 | Server |
| 19 | Vergleichseinheit |
| 21 | Client |
| 23 | Server |
| 25 | Bestimmen der Umlaufzeit |
| 27 | Wiederholen der Bestimmung |
| 29 | Abtasten des Sprachsignals |
| 31, 31' | Sprachsignalabschnitt |
| 35, 35' | Prüfdatensatz |
| 37, 37' | Weiterer Sprachsignalabschnitt |
| 39 | Vergleich der Prüfdatensätze |
| 41 | Authentifikation / Identitätsfeststellung |
| 43 | Rollenvereinbarung und Uhrensynchronisation |
| 45 | Übersenden der Initialwerte |
| 47 | Vergleich der Prüfdatensätze |
| 49 | Abtasten der Sprachsignale |
| 51 | Signalvorverarbeitung |
| 53 | Aufteilung des Sprachsignalabschnitts in Fenster |
| 55 | Extraktion der Merkmale |

| 57 | Austausch der Prüfdatensätze über den Sicherheitskanal |
| 59 | Vergleich der Prüfdatensätze |
| 61 | Berechnung des Gesamtergebnisses |
| 63 | Entscheidung über die Authentizität von Teilnehmern |
| 65 | Indexvektor |
| 67 | Lokaler Prüfdatensatz |
| 69, 69' | Übertragener Prüfdatensatz |
| 71a, 71b, 71c | Eingabedaten unterschiedlicher Stimmmerkmale |
| 73a, 73b, 73c | Vergleich der lokalen mit entfernten Daten |
| 75, 75' | Test auf Identität / Nichtidentität |
| 77 | Berechnung und Gewichtung des Ergebnisses |
| 78 | Klassifizierung der Ergebnisse |
| 79 | Authentifikation des Kanals / der Teilnehmer |
| 82 | MainGUI-Klasse |
| 83 | DataModel-Klasse |
| 85 | FeatureProcessorOpti-Klasse |
| 87 | FeatureExtractor-Klasse |
| 89 | RTTServer-Klasse |
| 91 | RTTClient-Klasse |
| 93 | NetworkCommunication-Klasse |
| 95 | DecisionProcessor-Klasse |

**Patentansprüche**

1. Verfahren zur Authentifikation von Teilnehmern eines Telefoniedienstes, das folgende Schritte umfasst:

   Aufbauen eines Übertragungskanals zwischen einem ersten (23) und mindestens einem zweiten (21) Endgerät von Teilnehmern des Telefoniedienstes,
   **gekennzeichnet durch**
   Abtasten von Sprachsignalen, die über den Übertragungskanal übertragen werden, an jedem Endgerät (21, 23),
   Erzeugen eines Prüfdatensatzes (35, 35') aus den abgetasteten Sprachsignalen an jedem Endgerät (21, 23),
   Senden mindestens eines ersten Prüfdatensatzes (35') des ersten Endgeräts (23) von dem ersten Endgerät (23) aus über einen Sicherheitskanal und
   Vergleichen (39) des mindestens einen über den Sicherheitskanal gesendeten ersten Prüfdatensatzes (35') mit mindestens einem zweiten Prüfdatensatz (35) des zweiten Endgeräts (21), wobei die am ersten Endgerät (23) abgetasteten Sprachsignale, aus denen der mindestens eine erste Prüfdatensatz (35') erzeugt wird, im Wesentlichen den am zweiten Endgerät (21) abgetasteten Sprachsignalen entsprechen, aus denen der mindestens eine zweite Prüfdatensatz (35) erzeugt wird.

2. Verfahren nach Anspruch 1, das ferner ein Empfangen des ersten Prüfdatensatzes (35') über den Sicherheitskanal an dem zweiten Endgerät (21) umfasst, wobei der über den Sicherheitskanal empfangene erste Prüfdatensatz (35') mit dem zweiten Prüfdatensatz (35) durch das zweite Endgerät (21) verglichen wird.

3. Verfahren nach Anspruch 1 oder 2, das ferner ein Senden des zweiten Prüfdatensatzes (35) von dem zweiten Endgerät (21) aus über den Sicherheitskanal, ein Empfangen des zweiten Prüfdatensatzes (35) über den Sicherheitskanal an dem ersten Endgerät (23) und ein Vergleichen des über den Sicherheitskanal empfangenen zweiten Prüfdatensatzes (35) mit dem ersten Prüfdatensatz (35') durch das erste Endgerät (23) umfasst.

4. Verfahren nach Anspruch 1, das ferner ein Senden des zweiten Prüfdatensatzes (35) von dem zweiten Endgerät (21) aus über den Sicherheitskanal umfasst, wobei der über den Sicherheitskanal gesendete erste Prüfdatensatz (35') mit dem über den Sicherheitskanal gesendeten zweiten Prüfdatensatz (35) durch eine Vergleichseinheit verglichen wird, die an den Sicherheitskanal gekoppelt ist und beide gesendeten Prüfdatensätze (35, 35') empfängt.

5. Verfahren nach einem der vorhergehenden Ansprüche, das ferner ein Vorgeben einer Startzeit für das Abtasten der Sprachsignale durch eines der Endgeräte (21, 23) umfasst, wobei die Sprachsignale ausgehend von der Startzeit an den Endgeräten (21, 23) jeweils zu einem im wesentlichen gleichen Zeitpunkt oder zu einem um einen Verzögerungswert versetzten Zeitpunkt abgetastet werden.

**6.** Verfahren nach einem der vorhergehenden Ansprüche, wobei das Abtasten der Sprachsignale ein Abtasten eines Sprachsignalabschnitts (31, 37, 31', 37') umfasst, der in einen Satz von Fenstern unterteilt ist, wobei jeder Prüfdatensatz (35, 35') mindestens eines der Fenster umfasst.

**7.** Verfahren nach einem der vorhergehenden Ansprüche, wobei das Erzeugen des Prüfdatensatzes (35, 35') ein Berechnen von Stimmmerkmalen aus mindestens einem der Fenster und ein Einfügen der Stimmmerkmale in den Prüfdatensatz (35, 35') umfasst und das Vergleichen (39) ein Bestimmen einer deterministisch zufälligen Auswahl aus dem Satz von Fenstern und ein Bestimmen eines Abstands zwischen den zugehörigen Daten der ausgewählten Fenster aus dem über den Sicherheitskanal gesendeten ersten Prüfdatensatz (35') und dem zweiten Prüfdatensatz (35) umfasst.

**8.** Verfahren nach einem der vorhergehenden Ansprüche, das ferner ein Feststellen (41) einer Identität eines Teilnehmers durch Auslesen von Sicherheitsmerkmalen aus einem auf den Teilnehmer personalisierten Datenspeicher und Übertragen der Sicherheitsmerkmale an einen Server umfasst, wobei das Auslesen ein Auslesen von Daten auf einem Personalausweis umfasst.

**9.** Computer-lesbares Medium mit darauf gespeicherten Befehlen, die, wenn sie von einem Computersystem ausgeführt werden, das Computersystem dazu veranlassen, ein Verfahren nach einem der vorhergehenden Ansprüche auszuführen.

**10.** System zur Authentifikation von Teilnehmern eines Telefoniedienstes, das Folgendes umfasst:

einen Übertragungskanal (3), der ein erstes (5) und mindestens ein zweites (7) Endgerät von Teilnehmern (9, 9') des Telefoniedienstes verbindet,
**gekennzeichnet durch**
eine Abtastvorrichtung an jedem Endgerät (5, 7), die eingerichtet ist, Sprachsignale, die über den Übertragungskanal (3) übertragen werden, an dem jeweiligen Endgerät (5, 7) abzutasten,
eine Verarbeitungseinheit an jedem Endgerät (5, 7), die eingerichtet ist, aus den abgetasteten Sprachsignalen jeweils einen Prüfdatensatz zu erzeugen,
einen Sicherheitskanal (11), der an das erste Endgerät (5) gekoppelt ist und über den mindestens ein erster Prüfdatensatz des ersten Endgeräts (5) gesendet wird, und
eine Vergleichseinheit (19), die eingerichtet ist, den mindestens einen über den Sicherheitskanal (11) gesendeten ersten Prüfdatensatz mit mindestens einem zweiten Prüfdatensatz des zweiten Endgeräts (7) zu vergleichen, wobei die am ersten Endgerät (5) abgetasteten Sprachsignale, aus denen der mindestens eine erste Prüfdatensatz erzeugt ist, im Wesentlichen den am zweiten Endgerät (7) abgetasteten Sprachsignalen entsprechen, aus denen der mindestens eine zweite Prüfdatensatz erzeugt ist.

**11.** System nach Anspruch 10, wobei das zweite Endgerät (7) an den Sicherheitskanal (11) und die Vergleichseinheit (19) gekoppelt ist, um den ersten Prüfdatensatz zu empfangen und den über den Sicherheitskanal (11) empfangenen ersten Prüfdatensatz mit dem zweiten Prüfdatensatz zu vergleichen, und/oder das zweite Endgerät (7) ferner eingerichtet ist, den zweiten Prüfdatensatz über den Sicherheitskanal (11) zu senden, und das erste Endgerät (5) ferner eingerichtet ist, den zweiten Prüfdatensatz über den Sicherheitskanal (11) zu empfangen, wobei das System ferner eine weitere Vergleichseinheit umfasst, die an das erste Endgerät (5) gekoppelt ist, um den über den Sicherheitskanal (11) empfangenen zweiten Prüfdatensatz mit dem ersten Prüfdatensatz des ersten Endgeräts (7) zu vergleichen.

**12.** System nach Anspruch 10 oder 11, wobei durch eines der Endgeräte (5, 7) eine Startzeit für die Abtastung vorgegeben wird und die Abtastvorrichtungen ausgehend von der Startzeit die Sprachsignale an den Endgeräten (5, 7) jeweils zu einem im wesentlichen gleichen Zeitpunkt oder zu einem um einen Verzögerungswert versetzten Zeitpunkt abtasten, wobei die Abtastvorrichtung einen Sprachsignalabschnitt abtastet, der in einen Satz von Fenstern unterteilt ist, und jeder Prüfdatensatz mindestens eines der Fenster umfasst, wobei der aus den Sprachsignalen erzeugte Prüfdatensatz Stimmmerkmale umfasst, die aus mindestens einem der Fenster berechnet sind.

**13.** System nach einem der Ansprüche 10 bis 12, wobei der Übertragungskanal (3) ein analoger oder digitaler Telefonkanal ist oder eine paketbasierte Verbindung, vorzugsweise eine Internet-Telefonie- oder Voice over IP-Verbindung bereitstellt.

**14.** System nach einem der Ansprüche 10 bis 13, wobei das System ferner mindestens eine Lesevorrichtung (15) umfasst, die mit einem Endgerät (5) eines Teilnehmers (9) gekoppelt ist und eingerichtet ist, Sicherheitsmerkmale aus einem auf den Teilnehmer (9) personalisierten Datenspeicher auszulesen, wobei die Lesevorrichtung (15) mit einem Server (17) verbunden ist und eingerichtet ist, die ausgelesenen Sicherheitsmerkmale an den Server (17) zu senden, um die Identität des Teilnehmers (9) festzustellen, wobei der Datenspeicher in einem Personalausweis angeordnet ist und die Lesevorrichtung (15) zum Auslesen der Daten auf dem Personalausweis eingerichtet ist.

15. Vorrichtung zur Authentifikation von Teilnehmern eines Telefoniedienstes, die Folgendes umfasst:

ein erstes Endgerät eines Teilnehmers, das über einen Übertragungskanals mit mindestens einem zweiten Endgerät verbunden ist,
**gekennzeichnet durch**
eine Abtasteinheit, die eingerichtet ist, Sprachsignale, die über den Übertragungskanal übertragen werden, an dem ersten Endgerät abzutasten, und
eine Verarbeitungseinheit, die eingerichtet ist, aus den abgetasteten Sprachsignalen einen ersten Prüfdatensatz zu erzeugen,
wobei das erste Endgerät ferner an einen Sicherheitskanal gekoppelt ist, über den der erste Prüfdatensatz und/oder mindestens ein zweiter Prüfdatensatz gesendet wird, der an dem zweiten Endgerät aus dem dort abgetasteten Sprachsignal erzeugt wird, wobei der über den Sicherheitskanal gesendete Prüfdatensatz mit dem anderen verglichen wird,
wobei die abgetasteten Sprachsignale, aus den der erste Prüfdatensatz erzeugt ist, im Wesentlichen dem am zweiten Endgerät abgetasteten Sprachsignal entsprechen, aus dem der zweite Prüfdatensatz erzeugt ist.

**Claims**

1. A method for the authentication of participants in a telephony service, comprising the following steps:

establishing a transmission channel between a first (23) and at least one second (21) terminal of participants of the telephony service,
**characterized by**
scanning of voice signals transmitted via the transmission channel, on each terminal (21,23),
generating a test data set (35, 35') from the scanned voice signals, on each terminal (21,23),
transmitting, from the first terminal (23), of at least one first test data set (35') of the first terminal (23), via a security channel, and
comparing (39) the at least one first test data set (35') transmitted via the security channel with at least one second test data set (35) of the second terminal (21), wherein
the voice signals scanned on the first terminal (23), from which the at least one first test data set (35') is generated, substantially correspond to the voice signals scanned on the second terminal (21), from which the at least one second test data set (35) is generated.

2. The method according to claim 1, further comprising a receipt of the first test data set (35') at the second terminal (21) via the security channel, wherein the first test data set (35'), received via the security channel, is compared with the second test data set (35) by second terminal (21).

3. The method according to claim 1 or 2, further comprising transmitting the second test data set (35) from the second terminal (21) via the security channel, receiving the second test data set (35) at the first terminal (23) via the security channel, and comparing, by the first terminal (23), the second test data set (35), received via the security channel, with the first test data set (35').

4. The method according to claim 1, further comprising transmitting the second test data set (35) from the second terminal (21) via the security channel, wherein the first test data set (35'), transmitted via the security channel, is compared with the second test data set (35) transmitted via the security channel by means of a comparison unit which is coupled to the security channel and receives the two transmitted test data sets (35, 35').

5. The method according to one of the preceding claims, further comprising defining a start time for scanning the voice signals by one of the terminals (21, 23), wherein the voice signals, starting from the start time at the terminals (21, 23), are respectively scanned at substantially the same time, or at a time offset by a delay value.

6. The method according to one of the preceding claims, wherein scanning the voice signals includes scanning a voice signal portion (31, 37, 31', 37') sub-divided into a set of windows, wherein each test data set (35, 35') includes at least one of the windows.

7. The method according to one of the preceding claims, wherein generating the test data set (35, 35') includes a computing of voice features from at least one of the windows, and integrating the voice features into the test data set (35, 35'), and comparing (39) includes determining a selection of a deterministically-random selection from the set of windows and determining a distance between the associated data of the selected windows from the first test data set (35') and the second test data set (35) transmitted via the security channel.

8. The method according to one of the preceding claims, further comprising identifying (41) an identity of a participant by reading security features from a data storage personalized to the participant, and transmitting the security features to a server, wherein the reading includes a reading of data on an ID card.

9. A computer-readable medium having instructions stored thereon, which, when executed by a computer system, cause the computer system to carry out a method according to one of the preceding claims.

10. A system for the authentication of participants of a telephony service, comprising:

a transmission channel (3) connecting a first (5) and at least one second (7) terminal of participants (9, 9') in the telephony service,
**characterized by**
a scanning device on each terminal (5, 7), which is configured to scan voice signals transmitted via the transmission channel (3), at the respective terminal (5, 7),
a processing unit on each terminal (5, 7), which is configured to generate in each case one test data set from the scanned voice signals,
a security channel (11) coupled to the first terminal (5) and through which at least one first test data set of the first terminal (5) is transmitted; and
a comparison unit (19), which is configured to compare the at least one first test data set transmitted via the security channel (11) with at least one second test data set of the second terminal (7), wherein the voice signals scanned on the first terminal (5), from which the at least one first test data set is generated, substantially correspond to the voice signals scanned on the second terminal (7), from which the at least one second test data set is generated.

11. The system according to claim 10, wherein the second terminal (7) is coupled to the security channel (11) and to the comparison unit (19) in order to receive the first test data set, and to compare the first test data set received via the security channel (11) with the second test data set, and/or the second terminal (7) is further configured to transmit the second test data set via the security channel (11), and the first terminal (5) is further configured to receive the second test data set via the security channel (11), wherein the system further includes another comparison unit coupled to the first terminal (5), in order to compare the second test data set received via the security channel (11) with the first test data set of the first terminal (7).

12. The system according to claim 10 or 11, wherein a start time for the scanning is established by one of the terminals (5, 7), and the scanning devices, starting from the start time, scan the voice signals at the terminals (5, 7) respectively at substantially the same time, or at a time offset by a delay value, wherein the scanning device scans a voice signal portion sub-divided into a set of windows, and each test data set includes at least one of the windows, wherein the test data set generated from the voice signals includes voice features computed from at least one of the windows.

13. The system according to one of claims 10 to 12, wherein the transmission channel (3) is a digital or analog telephony channel, or provides a packet-based connection, preferably an internet telephony or Voice-over-IP connection.

14. The system according to one of claims 10 to 13, wherein the system further comprises at least one reader (15) coupled to a terminal (5) of a participant (9) and configured to read security features from a data storage personalized to the participant (9), wherein the reader (15) is connected to a server (17) and configured to transmit the read security features to the server (17) in order to identify the identity of a participant (9), wherein the data storage is arranged in an ID card and the reader (15) is configured to read the data on the ID card.

15. A device for the authentication of participants in a telephony service, which comprises:

a first terminal of a participant, which is connected to at least one second terminal via a transmission channel, **characterized by**

a scanning unit configured to scan voice signals transmitted via the transmission channel, at the first terminal, and a processing unit configured to generate the first test data set from the scanned voice signals,

wherein the first terminal is further coupled to a security channel, via which the first test data set and/or at least one second test data set is transmitted, which is generated at the second terminal from the voice signal scanned there, wherein the test data set transmitted via the security channel is compared to the other one, wherein the scanned voice signals, from which the first test data set is generated, substantially correspond to the voice signal scanned on the second terminal, from which the second test data set is generated.

## Revendications

1. Procédé d'authentification d'usagers d'un service téléphonique, lequel comprend les étapes suivantes :

   établissement d'un canal de transmission entre un premier terminal (23) et au moins un deuxième terminal (21) d'usagers du service téléphonique,
   **caractérisé par**
   échantillonnage de signaux vocaux qui sont transmis par l'intermédiaire du canal de transmission, sur chaque terminal (21, 23),
   génération d'un jeu de données de contrôle (35, 35') à partir des signaux vocaux échantillonnés sur chaque terminal (21, 23),
   émission d'au moins un premier jeu de données de contrôle (35') du premier terminal (23) à partir du premier terminal (23) par l'intermédiaire d'un canal de sécurité, et comparaison (39) de l'au moins un premier jeu de données de contrôle (35') émis par l'intermédiaire du canal de sécurité avec au moins un deuxième jeu de données de contrôle (35) du deuxième terminal (21), les signaux vocaux échantillonnés sur le premier terminal (23), à partir desquels l'au moins un premier jeu de données de contrôle (35') est généré, correspondant essentiellement aux signaux vocaux échantillonnés sur le deuxième terminal (21), à partir desquels l'au moins un deuxième jeu de données de contrôle (35) est généré.

2. Procédé selon la revendication 1, lequel comprend en outre une réception du premier jeu de données de contrôle (35') sur le deuxième terminal (21) par l'intermédiaire du canal de sécurité, le premier jeu de données de contrôle (35') reçu par l'intermédiaire du canal de sécurité étant comparé avec le deuxième jeu de données de contrôle (35) au moyen du deuxième terminal (21).

3. Procédé selon la revendication 1 ou 2, lequel comprend en outre une émission du deuxième jeu de données de contrôle (35) à partir du deuxième terminal (21) par l'intermédiaire du canal de sécurité, une réception du deuxième jeu de données de contrôle (35) sur le premier terminal (23) par l'intermédiaire du canal de sécurité, et une comparaison avec le premier jeu de données de contrôle (35') du deuxième jeu de données de contrôle (35) reçu par l'intermédiaire du canal de sécurité, au moyen du premier terminal (23).

4. Procédé selon la revendication 1, lequel comprend en outre une émission du deuxième jeu de données de contrôle (35) à partir du deuxième terminal (21) par l'intermédiaire du canal de sécurité, le premier jeu de données de contrôle (35') émis par l'intermédiaire du canal de sécurité étant comparé avec le deuxième jeu de données de contrôle (35) émis par l'intermédiaire du canal de sécurité au moyen d'une unité de comparaison, laquelle est couplée au canal de sécurité et reçoit les deux jeux de données de contrôle (35, 35') émis.

5. Procédé selon l'une quelconque des revendications précédentes, lequel comprend en outre une spécification d'un temps de départ pour l'échantillonnage des signaux vocaux par l'un des terminaux (21, 23), les signaux vocaux, en partant du temps de départ sur les terminaux (21, 23), étant respectivement échantillonnés à un moment essentiellement identique ou à un moment décalé d'une valeur de temporisation.

6. Procédé selon l'une quelconque des revendications précédentes, l'échantillonnage des signaux vocaux comprenant un échantillonnage d'un segment de signal vocal (31, 37, 31', 37') qui est divisé en un jeu de fenêtres, chaque jeu de données de contrôle (35, 35') comprenant au moins une des fenêtres.

7. Procédé selon l'une quelconque des revendications précédentes, la génération du jeu de données de contrôle (35, 35') comprenant au moins un calcul de caractéristiques vocales à partir d'au moins une fenêtre et une insertion des caractéristiques vocales dans le jeu de données de contrôle (35, 35'), et la comparaison (39) comprenant une détermination d'une sélection aléatoire de manière déterministe à partir du jeu de fenêtres et une détermination, à partir du premier jeu de données de contrôle (35') émis par le canal de sécurité et du deuxième jeu de données de contrôle (35), d'un écart entre les données correspondantes des fenêtres sélectionnées.

8. Procédé selon l'une quelconque des revendications précédentes, lequel comprend en outre une constatation (41) d'une identité d'un usager par lecture de caractéristiques de sécurité à partir d'une mémoire de données personnalisées relatives à l'usager, et la transmission des caractéristiques de sécurité à un serveur, la lecture comprenant une lecture de données présentes sur une carte d'identité.

9. Support lisible par ordinateur comprenant des instructions qui y sont mémorisées, lesquelles, lorsqu'elles sont exécutées par un système informatique, incitent l'ordinateur à exécuter un procédé selon l'une quelconque des revendications précédentes.

10. Système d'authentification d'usagers d'un service téléphonique, lequel comprend les éléments suivants :

un canal de transmission (3) qui relie un premier terminal (5) et au moins un deuxième terminal (7) d'usagers (9, 9') du service téléphonique,
**caractérisé par**
un dispositif d'échantillonnage sur chaque terminal (5, 7), lequel est configuré pour échantillonner sur le terminal respectif (5, 7) les signaux vocaux qui sont transmis par l'intermédiaire du canal de transmission (3),
une unité de traitement sur chaque terminal (5, 7), laquelle est configurée pour générer respectivement un jeu de données de contrôle à partir des signaux vocaux échantillonnés,
un canal de sécurité (11) qui est couplé au premier terminal (5) et par l'intermédiaire duquel au moins un premier jeu de données de contrôle du premier terminal (5) est émis, et
une unité de comparaison (19) qui est configurée pour comparer l'au moins un premier jeu de données de contrôle émis par l'intermédiaire du canal de sécurité (11) avec au moins un deuxième jeu de données de contrôle du deuxième terminal (7), les signaux vocaux échantillonnés sur le premier terminal (5), à partir desquels l'au moins un premier jeu de données de contrôle est généré, correspondant essentiellement aux signaux vocaux échantillonnés sur le deuxième terminal (7), à partir desquels l'au moins un deuxième jeu de données de contrôle est généré.

11. Système selon la revendication 10, le deuxième terminal (7) étant couplé au canal de sécurité (11) et à l'unité de comparaison (19) afin de recevoir le premier jeu de données de contrôle et de comparer le premier jeu de données de contrôle reçu par l'intermédiaire du canal de sécurité (11) avec le deuxième jeu de données de contrôle, et/ou le deuxième terminal (7) étant en outre configuré pour émettre le deuxième jeu de données de contrôle par l'intermédiaire du canal de sécurité (11), et le premier terminal (5) étant en outre configuré pour recevoir le deuxième jeu de données de contrôle par l'intermédiaire du canal de sécurité (11), le système comprenant en outre une unité de comparaison supplémentaire qui est couplée au premier terminal (5) afin de comparer le deuxième jeu de données de contrôle reçu par l'intermédiaire du canal de sécurité (11) avec le premier jeu de données de contrôle du premier terminal (7).

12. Système selon la revendication 10 ou 11, un temps de départ étant spécifié par l'un des terminaux (5, 7) pour l'échantillonnage, et les dispositifs d'échantillonnage, en partant du temps de départ, échantillonnant les signaux vocaux sur les terminaux (5, 7) respectivement à un moment essentiellement identique ou à un moment décalé d'une valeur de temporisation, le dispositif d'échantillonnage échantillonnant un segment de signal vocal, qui est divisé en un jeu de fenêtres, et chaque jeu de données de contrôle comprenant au moins une des fenêtres, le jeu de données de contrôle généré à partir des signaux vocaux comprenant des caractéristiques vocales qui sont calculées à partir d'au moins une des fenêtres.

13. Système selon l'une quelconque des revendications 10 à 12, le canal de transmission (3) étant un canal téléphonique analogique ou numérique ou une liaison à base de paquets, fournissant de préférence une liaison de téléphonie par Internet ou VoIP.

14. Système selon l'une quelconque des revendications 10 à 13, le système comprenant en outre au moins un dispositif de lecture (15) qui est couplé à un terminal (5) d'un usager (9) et est configuré pour lire des caractéristiques de sécurité à partir d'une mémoire de données personnalisées relatives à l'usager (9), le dispositif de lecture (15) étant relié à un serveur (17) et étant configuré pour émettre les caractéristiques de sécurité au serveur (17) afin de constater l'identité de l'usager (9), la mémoire de données étant disposée dans une carte d'identité et le dispositif de lecture (15) étant configuré pour lire les données disponibles sur la carte d'identité.

15. Dispositif d'authentification d'usagers d'un service téléphonique, lequel comprend les éléments suivants :

un premier terminal d'un usager, lequel est relié à au moins un deuxième terminal par l'intermédiaire d'un canal de transmission,

**caractérisé par**

une unité d'échantillonnage qui est configurée pour échantillonner sur le premier terminal les signaux vocaux transmis par l'intermédiaire du canal de transmission, et

une unité de traitement qui est configurée pour générer un premier jeu de données de contrôle à partir des signaux vocaux échantillonnés,

le premier terminal étant en outre couplé à un canal de sécurité par l'intermédiaire duquel le premier jeu de données de contrôle et/ou au moins un deuxième jeu de données de contrôle sont émis, qui est généré/sont générés sur le deuxième terminal à partir du signal vocal qui y est échantillonné, le jeu de données de contrôle émis par l'intermédiaire du canal de sécurité étant comparé avec l'autre,

les signaux vocaux échantillonnés, à partir desquels le premier jeu de données de contrôle est généré, correspondant essentiellement au signal vocal échantillonné sur le deuxième terminal, à partir duquel le deuxième jeu de données de contrôle est généré.

**Fig. 1**

EP 2 602 982 B1

Fig. 2

Fig. 3

49      51      53      55      57

| Audio In: A/D- Wandlung | Signal- vorverarbeitung | Aufteilung in Fenster | Extraktion Feature-Vektor 1 | Feature- Vektoren über Netzwerk mit Client tauschen |

Extraktion Feature-Vektor 2

Extraktion Feature-Vektor 3

...

Extraktion Feature-Vektor 4

Vergleich Client- und Server-Vektor 1

Vergleich Client- und Server-Vektor 2

Vergleich Client- und Server-Vektor 3

...

Vergleich Client- und Server-Vektor 4

(+)

Berechnung Gesamtscore

Entscheidung anhand Schwellwert: **KANAL AUTHENTISCH?**

59      61      63

## Fig. 4

**Fig. 5**

Fig. 6A

Fig. 6B

73a 75 77

71a

| Client **Featureextraktor 1** Spectral Flux |
|---|
| Server **Featureextraktor 1** Spectral Flux |

$D_1$: $c_{11}$, $c_{12}$ aus **Vergleich Client/Server mit DTW**

$cmp_{11}$ = {0, 1}:

Identische Stelle $c_{11}$
<
Schwellwert $_{Feature\ 1}$ ?

$cmp_{12}$ = {0, 1}:

Nichtidentische Stelle $c_{12}$
>
Schwellwert $_{Feature\ 1}$ ?

$comb_1$ = $cmp_{11} \wedge cmp_{12}$

**Gewichtung** $res_1 = comb_1 \cdot w_1$

75'

71b

| Client **Featureextraktor 2** Compactness |
|---|
| Server **Featureextraktor 2** Compactness |

$D_2$: $c_{21}$, $c_{22}$ aus **Vergleich Client/Server mit DTW**

...

...

73b

...

71c

| Client **Featureextraktor 5** Method of Moments |
|---|
| Server **Featureextraktor 5** Method of Moments |

$D_5$: $c_{51}$, $c_{52}$ aus **Vergleich Client/Server mit DTW**

...

73c

**Weighted Majority Vote**

$w_{\Delta tm}$ :
$\Sigma\ res_i$ >
Schwellwert $_{Vote}$ ?

**Authentisch/ Nicht authentisch**

$\Sigma\ w_{\Delta tm}$ >
Schwellwert $_{\Delta tm}$ ?

78 79

**Fig. 7**

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007131523 A1
- US 20050063522 A1

- WO 03075540 A2